# EUROPÄISCHE PATENTSCHRIFT

(11) **EP 1 656 809 B1**
(45) Veröffentlichungstag und Bekanntmachung des Hinweises auf die Patenterteilung: **15.05.2013**
(21) Anmeldenummer: 04766512.0
(22) Anmeldetag: 17.08.2004
(51) Int. Cl.: H04W 74/00, H04W 74/08

(54) **VERFAHREN ZUR AUSWAHL EINES ZUR VERFÜGUNG STEHENDEN ÜBERTRAGUNGSKANALS DURCH SENDEN EINES NEGATIVEN ENTSCHEIDUNGSWERTS UND EINES ZUSÄTZLICHEN POSITIVEN ENTSCHEIDUNGSWERTS, SOWIE ENTSPRECHENDE BASISTATION, MOBILES ENDGERÄT UND MOBILFUNKNETZ**
METHOD FOR SELECTION OF AN AVAILABLE TRANSMISSION CHANNEL BY SENDING A NEGATIVE DECISION VALUE AND AN ADDITIONAL POSITIVE DECISION VALUE AND CORRESPONDING BASE STATION MOBILE TERMINAL AND MOBILE RADIO NETWORK
PROCEDE DE SELECTION D'UNE VOIE DE TRANSMISSION DISPONIBLE PAR ENVOI D'UNE VALEUR DE DECISION NEGATIVE ET D'UNE VALEUR DE DECISION POSITIVE SUPPLEMENTAIRE, AINSI QUE STATION DE BASE CORRESPONDANTE, TERMINAL MOBILE ET RESEAU DE RADIOTELEPHONIE MOBILE

(30) Priorität: 18.08.2003 DE 10337828
(43) Veröffentlichungstag der Anmeldung: 17.05.2006
(73) Patentinhaber: Siemens Aktiengesellschaft, 80333 München (DE)
(72) Erfinder: BIENAS, Maik, 30519 Hannover (DE); GOTTSCHALK, Thomas, 82008 Unterhaching (DE); SCHWAGMANN, Norbert, 38102 Braunschweig (DE)
(86) Internationale Anmeldenummer: PCT/EP2004/051811
(87) Internationale Veröffentlichungsnummer: WO 2005/020616

(56) Entgegenhaltungen:
- WO-A-01/10157
- WO-A-01/11823
- WO-A-01/33884
- US-A1- 2002 080 745
- US-A1- 2003 139 170

## Beschreibung

Die Erfindung betrifft ein Verfahren zur Auswahl eines Übertragungskanals zur Übertragung von Nachrichten von einem mobilen Endgerät an eine Basisstation, bei dem das Endgerät zunächst ein Sendeberechtigungs-Anfragesignal für einen bestimmten Übertragungskanal an die Basisstation sendet und die Basisstation dann ein Antwortsignal an das Endgerät aussendet, welches einen ersten Entscheidungswert enthält, mit dem dem Endgerät signalisiert wird, ob es zum Senden einer Nachricht auf dem angefragten Übertragungskanal berechtigt ist oder nicht. Darüber hinaus betrifft die Erfindung ein entsprechendes Endgerät und eine Basisstation, welche zur Durchführung eines solchen Verfahrens benutzt werden können.

In zellularen Mobilfunksystemen wird eine Kommunikationsverbindung zwischen einem mobilen Endgerät, im Folgenden auch Terminal, Mobilfunkgerät oder "User Equipment" (UE) genannt, und dem Mobilfunknetz über eine sog. Basisstation hergestellt, welche die Mobilfunkteilnehmer in einem bestimmten Umkreis - in einer sog. Zelle - über einen oder mehrere Funkkanäle bedient. Eine solche Basisstation - im UMTS-Standard (UMTS = Universal Mobile Telecommunication System, Universelles Mobiles Telekommunikationssystem) auch als "Node B" bezeichnet - stellt die eigentliche Funkschnittstelle zwischen dem Mobilfunknetz und dem mobilen Endgerät bereit. Sie übernimmt die Abwicklung des Funkbetriebs mit den verschiedenen mobilen Teilnehmern innerhalb ihrer Zelle und überwacht die physikalischen Funkverbindungen. Darüber hinaus überträgt sie Netz- und Statusnachrichten an die Endgeräte.

Eine solche Basisstation muss zumindest eine Sende-/Empfangseinheit mit einer geeigneten Antennenvorrichtung sowie eine Prozessoreinrichtung aufweisen, welche die verschiedenen Prozesse innerhalb der Basisstation steuert. Ebenso müssen die einzelnen Endgeräte jeweils entsprechend Sende-/Empfangseinheiten mit geeigneten Antennenvorrichtungen und jeweils entsprechende Prozessoreinrichtungen aufweisen, welche die verschiedenen Prozesse im jeweiligen Endgerät steuern.

Im Mobilfunk wird zwischen zwei Verbindungsrichtungen unterschieden. Die Vorwärtsrichtung (Downlink, DL) beschreibt die Richtung von der Basisstation zum Endgerät, die Rückwärtsrichtung (Uplink, UL) die Richtung vom Endgerät zur Basisstation. Dabei existieren in der Regel in jeder Richtung mehrere verschiedene Übertragungskanäle. Bei moderneren Mobilfunkstandards, wie dem UMTS-Standard, gibt es für die Übertragung von Daten zwei Arten von sogenannten Transportkanälen: zum einen die sog. "Dedicated Channels" (zugewiesene Kanäle) und zum anderen die sog. "Common Channels" (gemeinsame Kanäle). Ein Dedicated Channel wird nur für die Übertragung von Informationen für bzw. von einem bestimmten Endgerät reserviert. Eine solche Ressource kann beispielsweise durch eine bestimmte Frequenz oder bei Systemen, die mit dem sog. CDMA-Verfahren (CDMA = Code Division Multiple Access; Codeaufgeteilter Mehrfachzugriff) arbeiten, durch Verwendung unterschiedlicher Spreizungscodes auf der gleichen Frequenz realisiert werden. Auf den Common Channels können von der Basisstation Informationen übertragen werden, die für alle Terminals gedacht sind bzw. diese Channels können sich die verschiedenen Endgeräte teilen, wobei jedes Endgerät den Kanal nur kurzzeitig nutzt.

Sinnvollerweise muss der Funkverkehr innerhalb einer solchen Zelle zwischen den verschiedenen Endgeräten und der Basisstation so organisiert werden, dass die Basisstation bezüglich ihrer Auslastung in der Lage ist, alle Daten zu verarbeiten und/oder dass so weit wie möglich vermieden wird, dass verschiedene Endgeräte gleichzeitig auf denselben Kanälen an die Basisstation senden und es dabei zu Kollisionen kommt. Hierzu sollte auf irgendeine Weise festgelegt werden, welches Endgerät wann auf welchem Übertragungskanal eine Nachricht an die Basisstation senden darf. Hierzu wird z. B. die eingangs genannte Prozedur durchgeführt.

Ein typisches Beispiel für eine solche Auswahlprozedur eines Übertragungskanals ist das sog. Zufallszugriffsverfahren (Random Access Procedure) im UMTS-Standard. Mit Hilfe dieses Verfahrens wird festgelegt, welches Endgerät auf welchem logischen Übertragungskanal eine kurze Nachricht an die Basisstation senden darf, um z.B. anzufragen, ob über die betreffende Basisstation ein Gesprächsaufbau erfolgen kann oder um beispielsweise eine kurze Statusinformation an die Basisstation zu senden. Der Begriff "logischer Übertragungskanal" ist hierbei so zu verstehen, dass die Endgeräte an sich ein- und denselben physikalischen gemeinsamen Uplink-Kanal verwenden, wobei die Endgeräte unterschiedliche Kanalisierungscodes (sogenannte "Channelization Codes") nutzen. Die Basisstation kann die von den verschiedenen Endgeräten auf diesem physikalischen gemeinsamen Kanal gesendeten Nachrichten und Signale anhand der Kanalisierungscodes so unterscheiden, wie wenn sie auf verschiedenen Kanälen gesendet worden wären. Bei dem genutzten Common Channel handelt es sich konkret um den sogenannten "PRACH" (Physical Random Access Channel, physikalischer Zufallszugriffskanal). Bei dem derzeitigen UMTS-Standard stehen im PRACH derzeit 16 verschiedene Channelization Codes zur Verfügung, d.h. auf dem PRACH sind 16 verschiedene logische Übertragungskanäle realisiert.

Bevor ein mobiles Endgerät beispielsweise beim Eintritt in eine bestimmte Zelle den PRACH benutzt, ist dem Endgerät nicht bekannt, welche Channelization Codes zur Zeit von anderen mobilen Endgeräten in dieser Zelle verwendet werden und welche frei sind. Daher sendet es wie eingangs beschrieben zunächst ein Sendeberechtigungssignal - im UMTS-Standard "Access Preamble" (Zugriffspräambel) genannt - an die Basisstation. Diese Access Preamble ist eindeutig einem bestimmten Channelization Code bzw. einem bestimmten logischen Übertragungskanal zugeordnet. Die Basisstation sendet dann ein Antwortsignal, welches entweder eine Bestätigung enthält, dass das Gerät mit diesem Channelisation Code die Nachricht senden darf oder mit dem das Senden der Nachricht mit diesem Channelization Code verweigert wird. Die Signalisierung erfolgt hierbei mit einem einzelnen Entscheidungswert - im UMTS-Standard in Form eines "Acquisition Indicator" (Akquisitionsanzeiger). Dieser Acquisition Indicator wird auf einem speziellen Downlink-Kanal, dem sog. AICH (Acquisition Indicator Channel, Akquisitionsanzeigekanal) von der Basisstation an die Endgeräte gesendet. Bei dem AICH handelt es sich - wie beim PRACH - um einen Common Channel, der von allen Endgeräten zu empfangen ist. Der Acquisition Indicator wird bei der Übertragung mit einer bestimmten Signaturzeichenfolge multipliziert, welche wiederum eindeutig dem betreffenden Channelization Code zugeordnet ist, für den das Endgerät zuvor das Sendeberechtigungsanfragesignal gesendet hat, so dass das betreffende Endgerät weiß, dass ihm das Senden der Nachricht mit diesem Channelization Code erlaubt oder verweigert wird.

Bei dem derzeitigen Standard zur Durchführung des Zufallszugriffsverfahrens erhält das Endgerät über den allgemeinen gemeinsamen Kanal BCH (Broadcast Channel, Rundfunkkanal), der von der Basisstation einer bestimmten Zelle permanent ausgesendet wird, Informationen über die zur Verfügung stehenden Channelization Codes sowie die notwendigen Informationen, wann und wie überhaupt ein Sendeberechtigungsanfragesignal an die Basisstation gesendet werden kann. Aus den für dieses Mobilfunkgerät zur Verfügung stehenden potentiellen Channelization Codes bzw. logischen Übertragungskanälen wählt das Mobilfunkgerät dann einen beliebigen aus und sendet das Sendeberechtigungsanfragesignal für diesen bestimmten Übertragungskanal mit einer bestimmten Sendeleistung. Kommt nach einer bestimmten Zeit kein Antwortsignal, so sendet es erneut ein Sendeberechtigungsanfragesignal mit einer erhöhten Leistung und für einen anderen Übertragungskanal. Erhält es dann ein Antwortsignal mit einem positiven ersten Entscheidungswert, so sendet es schließlich die Nachricht auf dem angefragten Übertragungskanal - d. h. mit dem bestimmten Channelization Code auf dem PRACH - an die Basisstation. Bei einem negativen Entscheidungswert beginnt die Prozedur von vorn, d.h. das Endgerät sendet eine weitere Sendeberechtigungsanfrage für einen anderen Übertragungskanal an die Basisstation.

Dieses Verfahren ist akzeptabel, sofern es nur relativ selten dazu kommt, dass die Basisstation auf ein Sendeberechtigungs-anfragesignal hin einen negativen Entscheidungswert sendet, d.h. die Übertragung auf dem betreffenden Übertragungskanal verweigert. Dies ist beispielsweise bei Verfahren der Fall, bei denen ein negativer Entscheidungswert nur dann gesendet wird, wenn die Basisstation überlastet ist und keine weiteren Daten verarbeiten kann. Sofern aber die Auslastung der Basisstation weiter ansteigt oder wenn ein Verfahren genutzt wird, bei dem auch bestimmte Übertragungskanäle zur Verhinderung von Kollisionen eine bestimmte Zeit für bestimmte Endgeräte freigehalten werden, erhöht sich die Anzahl der negativen Entscheidungswerte erheblich. In diesem Fall wird das Verfahren uneffektiv, da das Endgerät jeden einzelnen möglichen Übertragungskanal einzeln durch Aussendung eines passenden Sendeberechtigungsanfragesignals abfragen muss.

Aus der WO 01/10157 A und US 2003/139170 A1 sind ebenfalls Verfahren und Systeme zur Zuweisung des UMTS Random Access Channels RACH bekannt.

Es ist eine Aufgabe der vorliegenden Erfindung, ein Verfahren der eingangs genannten Art dahingehend zu verbessern, dass den mobilen Endgeräten mit möglichst geringem Signalisierungsaufwand schneller und effektiver ein Übertragungskanal zum Senden einer Nachricht an die Basisstation zur Verfügung gestellt wird, sowie eine entsprechende Basisstationen und Mobilfunkgeräte zur Durchführung eines solchen effektiveren Übertragungskanal-Auswahlverfahrens anzugeben.

Diese Aufgabe wird gemäß der in den unabhängigen Ansprüchen definierten Erfindung dadurch gelöst, dass die Basisstation bei Übermittlung eines ersten negativen Entscheidungswerts, mit welchem dem Endgerät das Senden einer Nachricht auf dem angefragten Übertragungskanal verweigert wird, mit dem Antwortsignal einen zweiten positiven Entscheidungswert an das Endgerät sendet, wenn das Endgerät zum Senden einer Nachricht auf einem anderen Kanal berechtigt ist. Das Endgerät analysiert dann bei einer Detektion eines ersten negativen Entscheidungswerts im Antwortsignal das Antwortsignal dahingehend weiter, ob es einen solchen zweiten positiven Entscheidungswert enthält und welche anderen Übertragungskanäle aktuell zur Verfügung stehen, d. h. nicht belegt sind. Anschließend sendet das Endgerät dann die Nachricht auf einem der zur Verfügung stehenden Übertragungskanäle an die Basisstation.

Dieses Verfahren hat den großen Vorteil, dass - sofern noch andere Übertragungskanäle für eine aktuelle Übersendung von Nachrichten an die Basisstation zur Verfügung stehen, für die das betreffende Endgerät aber nicht gerade das Sendeberechtigungsanfragesignal gesendet hat - es nicht einfach zu einer bloßen Zurückweisung der Sendeberechtigungsanfrage kommt. Statt dessen wird dem Endgerät die Möglichkeit gegeben, auf einem anderen freien Übertragungskanal zu senden, ohne erneut ein Sendeberechtigungsanfragesignal zu senden. Hierdurch wird das Auswahlverfahren schneller. Außerdem wird unnötiger Datenverkehr für vermehrte Anfragen der Mobilfunkgeräte vermieden.

Von Seiten der Basisstation sieht das Verfahren so aus, dass die Basisstation vom Endgerät zunächst ein Sendeberechtigungsanfragesignal für einen bestimmten Übertragungskanal empfängt und dann ein Antwortsignal an das Endgerät aussendet, welches den betreffenden Entscheidungswert enthält. Dabei sendet die Basisstation bei Übermittlung eines ersten negativen Entscheidungswertes mit dem Antwortsignal einen zweiten positiven Entscheidungswert an das Endgerät, wenn das Endgerät zum Senden einer Nachricht auf einem anderen Kanal berechtigt ist. Eine erfindungsgemäße Basisstation muss hierzu eine Prozessoreinrichtung mit entsprechenden Mitteln zur Auswahl eines Übertragungskanals aufweisen. Hierzu gehören eine Decodiereinrichtung, die zur Erkennung eines von einem Endgerät übersendeten Sendeberechtigungsanfragesignals für einen bestimmten Übertragungskanal dient, und eine Kanalfreigabeeinrichtung zur Ermittlung derjenigen Übertragungskanäle, die aktuell für eine Übersendung einer Nachricht zur Verfügung stehen. Außerdem wird eine Codiereinrichtung benötigt, um ein Antwortsignal an das Endgerät auszusenden, welches den betreffenden ersten Entscheidungswert enthält. Dabei muss die Prozessoreinrichtung derart ausgebildet sein, dass bei Übermittlung des ersten negativen Entscheidungswerts entsprechend mit dem Antwortsignal ein zweiter positiver Entscheidungswert an das Endgerät gesendet wird, wenn das Endgerät zum Senden einer Nachricht auf einem anderen Kanal berechtigt ist. Die Mittel zur Auswahl eines Übertragungskanals, insbesondere die Decodiereinrichtung, die Kanalfreigabeeinrichtung sowie die Codiereinrichtung sind vorzugsweise in Form von Software in der Prozessoreinrichtung der Basisstation realisiert.

Von Seiten des Mobilfunkgeräts sieht das Verfahren so aus, dass das Gerät zunächst ein Sendeberechtigungsanfragesignal in der herkömmlichen Weise an die Basisstation sendet und dann von der Basisstation ein Antwortsignal empfängt, in welchem es schließlich einen ersten Entscheidungswert detektiert. Sofern das Endgerät einen ersten negativen Entscheidungswert detektiert, wird das Antwortsignal dahingehend weiter analysiert, ob es einen zweiten positiven Entscheidungswert enthält, mit dem dem Endgerät die Erlaubnis zum Senden einer Nachricht auf einem anderen Kanal signalisiert wird und welche anderen Übertragungskanäle zur Verfügung stehen. Anschließend wird vom Endgerät die Nachricht auf einem der anderen zur Verfügung stehenden Übertragungskanäle gesendet. Hierzu muss das Mobilfunkgerät eine Prozessoreinrichtung mit einer Einrichtung zur Auswahl eines Übertragungskanals aufweisen, welche eine Berechtigungsanfrageeinrichtung zur Generierung des Sendeberechtigungsanfragesignals und eine Decodierungseinrichtung umfasst, die das von der Basisstation übersendete Antwortsignal decodiert. Dabei muss die Decodierungseinrichtung derart ausgebildet sein, dass bei einer Detektion des ersten negativen Entscheidungswerts das Antwortsignal entsprechend weiter analysiert wird, um einen eventuellen zweiten positiven Entscheidungswert zu finden und zu prüfen, welche anderen Übertragungskanäle hierfür zur Verfügung stehen. Die Prozessoreinrichtung muss derart ausgebildet sein, dass die Nachricht dann auf einem der zur Verfügung stehenden anderen Übertragungskanäle gesendet wird. Die Einrichtung zur Auswahl eines Übertragungskanals im Mobilfunkgerät, insbesondere die Berechtigungsanfrageeinrichtung und die Decodierungseinrichtung sind vorzugsweise in Form von Software in der Prozessoreinrichtung des Mobilfunkgeräts realisiert.

Das Verfahren ist grundsätzlich für jede Art von Übertragungskanälen einsetzbar. Das heißt, das Verfahren kann beispielsweise zur Auswahl eines von mehreren physikalischen Übertragungskanälen genutzt werden. Eine wesentliche Anwendung besteht aber darin, einen von mehreren logischen Übertragungskanälen auszuwählen, welche durch Verwendung unterschiedlicher Kanalisierungscodes auf einem physikalischen Übertragungskanal realisiert werden, der von mehreren Endgeräten gemeinsam zur Übermittlung von Nachrichten an eine Basisstation genutzt wird. Insbesondere ist dieses Verfahren zur Verbesserung des eingangs beschriebenen Zufallszugriffs-verfahrens nach dem derzeitigen UMTS-Standard geeignet.

Die abhängigen Ansprüche enthalten jeweils besonders vorteilhafte Ausgestaltungen und Weiterbildung des erfindungsgemäßen Verfahrens, wobei die Vorrichtungsansprüche betreffend ein mobiles Endgerät, eine Basisstation und ein Mobilfunknetz entsprechend den Verfahrenansprüchen weitergebildet sein können.

Bei einem besonders bevorzugten Ausführungsbeispiel enthält das Antwortsignal explizite Kanalstatusinformationen, mit denen dem betreffenden Endgerät signalisiert wird, welche anderen Übertragungskanäle zum Senden einer Nachricht zur Verfügung stehen. Alternativ oder zusätzlich kann das Endgerät auch das Antwortsignal dahingehend decodieren, ob es weitere positive oder negative Entscheidungswerte für andere Endgeräte enthält, die sich auf andere Übertragungskanäle beziehen. Dies setzt voraus, dass das Antwortsignal auf einem Common Downlink-Kanal gesendet wird, der von allen Endgeräten decodierbar ist, und gleichzeitig Entscheidungswerte für die Sendeberechtigungsanfragesignal verschiedener Endgeräte enthalten kann, wie dies z. B. beim AICH der Fall ist.

Besonders bevorzugt werden ein eventuell gesendeter zweiter Entscheidungswert und/oder die Kanalstatusinformation innerhalb des Antwortsignals derart codiert, dass unabhängig davon, ob ein bestimmtes Antwortsignal überhaupt einen zweiten Entscheidungswert und/oder explizite Kanalstatusinformationen enthält, der erste Entscheidungswert unverändert vom Endgerät im Antwortsignal decodierbar ist. D. h. die Codierung der zusätzlich übermittelten Informationen erfolgt in einer Weise, dass die Codierung des bisher gesendeten Antwortsignals nicht geändert wird. Bezüglich des bereits mehrfach genannten Zufallszugriffsverfahrens im UMTS-Standard bedeutet dies, dass beispielsweise der Acquisition Indicator wie bisher gemäß der üblichen UMTS-Spezifikation (3GPP TS 25.211 oder TS 25.213 Release 99) gesendet wird. Dies hat den Vorteil, dass das gesamte Verfahren abwärts kompatibel ist, so dass auch Endgeräte, die nicht zur Durchführung des erfindungsgemäßen Verfahrens ausgestattet sind, nach wie vor das Antwortsignal in der üblichen Weise decodieren und den ersten Entscheidungswert detektieren können. Umgekehrt können auch mit Endgeräten, die nach dem erfindungsgemäßen Verfahren arbeiten, die Antwortsignale von Basisstationen empfangen werden, welche keinen zweiten Entscheidungswert senden, da sie nicht entsprechend ausgestattet sind.

Wie bereits eingangs beschrieben, erfolgt z. B. beim UMTS-Verfahren die Übersendung des als Entscheidungswert dienenden Acquisition Indicator auf dem AICH, wobei zur Codierung des Acquisition Indicator dieser mit einer Signatur-Zeichenfolge multipliziert wird, welche dem Sendeberechtigungs-Anfragesignal bzw. dem gewünschten Channelization Code zugeordnet ist. Das heißt, es existiert ein bestimmtes Set von Signatur-Zeichenfolgen, welche zur Codierung der ersten Entscheidungswerte im Antwortsignal genutzt werden. Die einzelnen Signatur-Zeichenfolgen dieses Sets sind jeweils orthogonal zueinander. Um den zweiten Entscheidungswert und/oder die Kanalstatusinformationen so zu codieren, dass der erste Entscheidungswert unabhängig davon decodierbar ist, werden vorzugsweise der zweite positive Entscheidungswert und/oder die Kanalstatusinformationen mittels einer Signatur-Zeichenfolge im Antwortsignal codiert, die orthogonal zu dem genannten ersten Set von Signatur-Zeichenfolgen ist, das zur Codierung des ersten Entscheidungswerts genutzt wird.

Eine solche Signatur-Zeichenfolge zur Codierung des zweiten positiven Entscheidungswerts und/oder der Kanalstatusinformation kann vorzugsweise dadurch erzeugt werden, indem jedes zweite Zeichen einer Signatur-Zeichenfolge des ersten Signatur-Zeichenfolgen-Sets mit "-1" multipliziert wird. Somit wird automatisch eine zum ersten Signatur-Zeichenfolgen-Set orthogonale neue Signatur-Zeichenfolge erzeugt.

Prinzipiell ist es möglich, dass die Basisstation jeweils erst dann eine zum ersten Signatur-Zeichenfolgen-Set orthogonale Signatur-Zeichenfolge erzeugt, wenn diese zur Codierung des zweiten Entscheidungswerts bzw. von Kanalstatusinformationen benötigt wird. Hierzu muss die Basisstation bzw. deren Codiereinrichtung eine entsprechende Zeichenfolgen-Generierungseinheit aufweisen, um den zweiten Entscheidungswert und/oder die Kanalstatusinformation entsprechend zu codieren. Ebenso müsste das Endgerät zur Codierung eine entsprechende Zeichenfolgen-Generierungseinheit aufweisen.

Bevorzugt wird jedoch in entsprechenden Speichereinrichtungen der Basisstation bzw. des Endgeräts jeweils bereits ein komplettes zweites Set von Signatur-Zeichenfolgen hinterlegt, wobei die Signatur-Zeichenfolgen dieses zweiten Signatur-Zeichenfolgen-Sets untereinander und zu allen Signatur-Zeichenfolgen des ersten Signatur-Zeichenfolgen-Sets orthogonal sind. Hierbei können die entsprechenden Signatur-Zeichenfolgen des zweiten Signatur-Zeichenfolgen-Sets jeweils aus den Signatur-Zeichenfolgen des ersten Signatur-Zeichenfolgen-Sets durch Multiplikation jedes zweiten Zeichens mit "-1" erzeugt werden.

Für die Übertragung des zweiten positiven Entscheidungswerts sowie der Kanalstatusinformationen gibt es verschiedenste Möglichkeiten.

Bei einer ersten Methode wird der zweite positive Entscheidungswert gemeinsam mit den Kanalstatusinformationen in einer Zeichenkette übermittelt, welche mit einer bestimmten, zum ersten Signatur-Zeichenfolgen-Set orthogonalen Signatur-Zeichenfolge codiert wird, beispielsweise mit einer Signatur-Zeichenfolge aus dem zweiten Signatur-Zeichenfolgen-Set.

Hierbei wird besonders bevorzugt eine Signatur-Zeichenfolge verwendet, welche der jeweiligen Basisstation fest zugeordnet ist, wobei darauf geachtet wird, dass benachbarte Basisstationen unterschiedliche zweite Signatur-Zeichenfolgen verwenden.

Bei einer alternativen Methode wird der zweite positive Entscheidungswert für ein bestimmtes Endgerät separat mit einer bestimmten, zum ersten Signatur-Zeichenfolgen-Set orthogonalen Signatur-Zeichenfolge codiert, welche dem Übertragungskanal zugeordnet ist, für den das betreffende Endgerät zuvor ein Sendeberechtigungs-Anfragesignal an die Basisstation gesandt hat.

Zusätzlich kann das Antwortsignal dann als Kanalstatusinformationen für jeden zum betreffenden Zeitpunkt belegten Übertragungskanal einen zweiten negativen Entscheidungswert enthalten. Hierbei werden gemäß einer ersten Variante die zweiten negativen Entscheidungswerte jeweils mit den den betreffenden belegten Übertragungskanälen zugeordneten Signatur-Zeichenfolgen aus dem ersten Signatur-Zeichenfolgen-Set codiert. Bei einer zweiten Variante werden die zweiten negativen Entscheidungswerte dagegen jeweils mit Signatur-Zeichenfolgen aus dem zweiten Set von Signatur-Zeichenfolgen codiert, welche wieder den betreffenden belegten Übertragungskanälen zugeordnet sind.

Die Erfindung wird im Folgenden unter Hinweis auf die beigefügten Figuren anhand von Ausführungsbeispielen noch einmal näher erläutert. Es zeigen:
Figur 1 eine schematische Darstellung des Aufbaus des AICH-Kanals im UMTS-Standard nach dem Stand der Technik,
Figur 2 eine schematische Darstellung des Ablaufs des Zufallszugriffsverfahrens nach dem Stand der Technik, wenn ein negativer Entscheidungswert zurückgesendet wird,
Figur 3 eine schematische Darstellung des Ablaufs des Zufallszugriffsverfahrens nach dem Stand der Technik, wenn ein positiver Entscheidungswert zurückgesendet wird,
Figur 4 eine Tabelle mit 16 verschiedenen, zueinander orthogonalen Präambel-Signatur-Zeichenfolgen Pₛ zur Codierung der Access Preamble im UMTS-Verfahren,
Figur 5 eine Tabelle mit 16 zueinander orthogonalen AICH-Signatur-Zeichenfolgen bₛ zur Codierung des Acquisition Indicator im UMTS-Verfahren,
Figur 6 eine schematische Darstellung der Bildung eines Antwortsignals beim Zufallszugriffverfahren im derzeitigen UMTS-Standard,
Figur 7 eine schematische Darstellung der Übersendung von Nachrichten verschiedener Länge auf dem PRACH-Kanal im UMTS-Verfahren,
Figur 8 eine schematische Darstellung eines erfindungsgemäßen Zufallszugriffsverfahrens gemäß einem ersten Ausführungsbeispiel,
Figur 9 eine Tabelle mit 16 zueinander orthogonalen AICH-Signatur-Zeichenfolgen eines zweiten AICH-Signatur-Zeichenfolgen-Sets,
Figur 10 eine schematische Darstellung der Bildung eines Antwortsignals in einem Zufallszugriffsverfahrens gemäß Figur 8,
Figur 11 eine schematische Darstellung eines erfindungsgemäßen Zufallszugriffsverfahrens gemäß einem zweiten Ausführungsbeispiel,
Figur 12 eine schematische Darstellung einer ersten Variante zur Bildung eines Antwortsignals bei einem Zufallszugriffsverfahren gemäß Figur 11,
Figur 13 eine schematische Darstellung einer zweiten Variante zur Bildung eines Antwortsignals bei einem Zufallszugriffsverfahren gemäß Figur 11.

Sämtliche in den Figuren beschriebenen Ausführungsbeispiele der Erfindung beziehen sich auf eine erfindungsgemäße Verbesserung des Zufallszugriffsverfahrens im FDD-Mode (Frequence Division Duplex-Mode, Frequenzteilungs-Duplex-Verfahren) des UMTS-Standards. Die Erfindung ist aber nicht auf diesen Einsatz beschränkt.

In einem UMTS-Mobilfunknetz können mehrere Mobilfunkgeräte gleichzeitig auf einer Frequenz im Uplink senden bzw. von einer Basisstation im Downlink bedient werden. Dies wird dadurch ermöglicht, dass durch Verwendung unterschiedlicher Spreizungscodes, welche orthogonal zueinander sind, die Bandbreite eines Signals gespreizt wird und somit unterschiedliche physikalische Kanäle auf einer Frequenz erzeugt werden.

Wie bereits eingangs erwähnt, gibt es beim UMTS-Standard sogenannte "Dedicated Channels", welche den einzelnen Geräten fest zugeordnet sind, und sogenannte "Common Channels", die von mehreren Endgeräten benutzt werden. Ein solcher Common Channel im Uplink-Bereich ist der sogenannte PRACH, den die einzelnen Endgeräte kurzzeitig nutzen, um Nachrichten an die Basisstation zu übersenden, beispielsweise Anfragen für einen Gesprächsaufbau. Auf dem physikalischen Kanal PRACH wird der Transportkanal RACH (Random Access Channel; Zufallszugriffskanal) abgebildet. Innerhalb einer bestimmten Zelle, d.h. einer bestimmten Basisstation, ist diesem PRACH ein ganz bestimmter Scrambling-Code zugeordnet. Ebenso besitzt jeder Dedicated Channel im Uplink seinen eigenen Scrambling-Code.

Auf der Downlink-Seite gibt es ebenfalls verschiedene Common Channels, beispielsweise den bereits eingangs genannten BCH und den AICH.

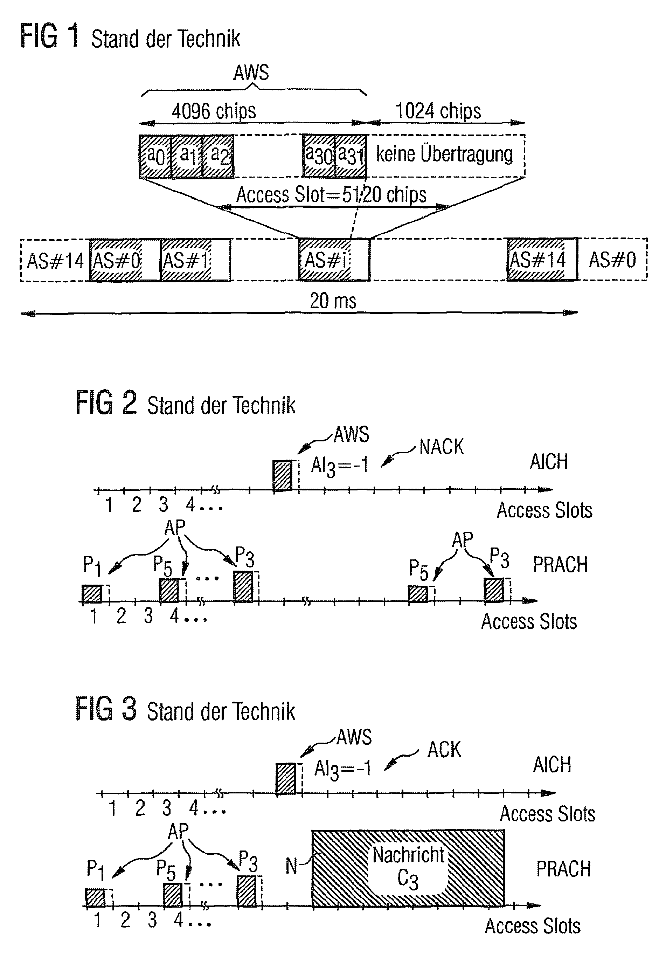

Der AICH ist in sogenannte "Radio Frames" (Funk-Fenster) RF von 20 ms Länge aufgeteilt. Ein Radio Frame enthält wiederum 15 sogenannte Access Slots (Zeitschlitze) AS. Dies ist für den AICH in Figur 1 dargestellt. Jeder Access Slot AS enthält 5.120 Chips, wobei derzeit lediglich 4.096 Chips bei der Übertragung genutzt werden und 1.024 Chips nicht belegt sind. In diesen 4.096 Chips sind insgesamt 32 reellwertige Symbole a₀,...,a₃₁ untergebracht. In entsprechender Weise ist auch der Teil des PRACHs aufgebaut, in dem die Zugriffspräambeln gesendet werden. Eine Zugriffspräambel enthält ebenfalls 4.096 Chips, die durch Spreizung einer Signatur der Länge 16 um den Faktor 256 entsteht. Der PRACH-Nachrichtenteil ist in Radio Frames der Länge 10 ms aufgeteilt, wobei ein Radio Frame aus 15 Slots (Zeitschlitzen) besteht. Ein Slot ist demnach halb so lang wie ein Access Slot und enthält 2.560 Chips. Eine PRACH-Nachricht kann nach dem bisherigen Stand der Technik 10 oder 20 ms lang sein.

In den Figuren 2 und 3 wird nun noch einmal detaillierter das bisher im UMTS-Standard verwendete Zufallszugriffsverfahren beschrieben, wobei in Figur 2 der Fall dargestellt ist, dass dem Endgerät das Senden auf einem angefragten Kanal verweigert wird und in Figur 3 der Fall, dass eine positive Sendebestätigung erfolgt.

Das Verfahren beginnt damit, dass ein Endgerät den BCH, der von einer Basisstation permanent ausgesendet wird, dahingehend analysiert, welcher Spreizungscode auf dem PRACH für dise Basisstation benutzt wird, welche Channelization Codes Cₛ grundsätzlich von dem betreffenden Endgerät in dieser Zelle verwendet werden könnten und welche Access Slots AS auf dem PRACH für das betreffende Endgerät zur Verfügung stehen. In dem in Figur 2 und 3 dargestellten Ausführungsbeispiel stehen dem Endgerät grundsätzlich die Channelization Codes C₁, C₃ und C₅ zur Verfügung. Das Endgerät wählt dann willkürlich einen aus den zur Verfügung stehenden Channelization Codes C₁, C₃, C₅ aus und sendet für diesen ein Sendeberechtigungsanfrage-Signal AP in einem bestimmten für das Endgerät zugelassenen Access Slot AS an die Basisstation. Das Sendeberechtigungsanfrage-Signal, im Folgenden auch Access Preamble AP genannt, besteht aus dem Scrambling Code des PRACH der Basisstation und einer Präambel-Signatur P₀,...,P₁₅, welche den verschiedenen 16 möglichen Channelization Codes C₀,...,C₁₅ zugeordnet sind.

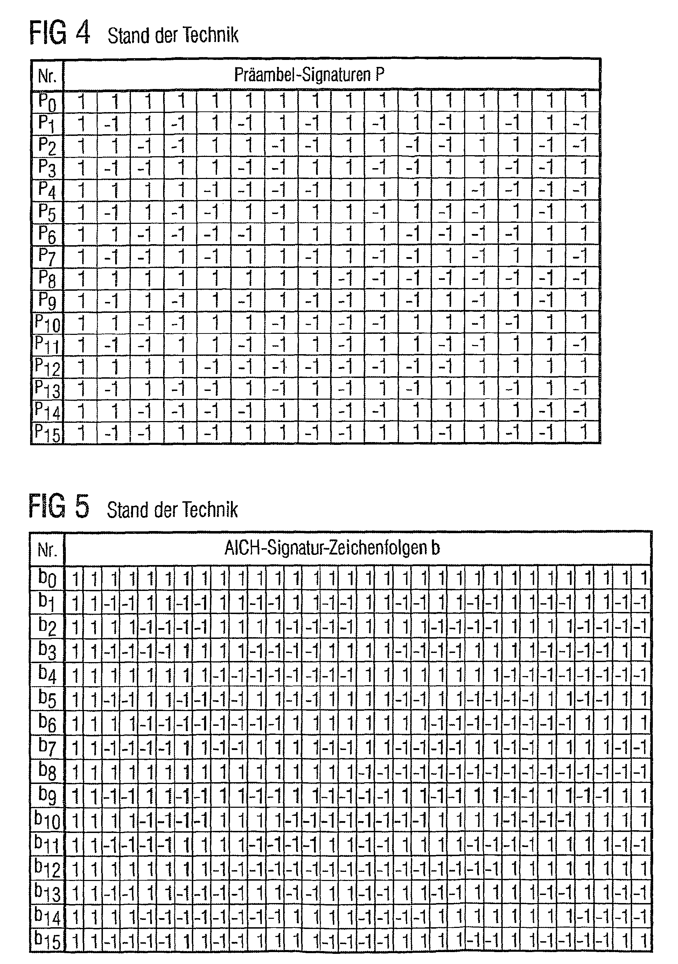

Die 16 verschiedenen Präambel-Signaturen P₀,...,P₁₅ sind in Figur 4 dargestellt. Durch Multiplikation einer zu einem bestimmten Channelization Code Cₛ gehörigen Präamble-Signatur Pₛ mit dem Scrambling Code des PRACH, wobei die Präambel-Signatur Pₛ 256-mal wiederholt wird, entsteht die Access Preamble AP.

Bei dem in den Figuren 2 und 3 dargestellten Ausführungsbeispiel sendet das Endgerät mit einer bestimmten Leistung zunächst eine Access Preamble AP mit dem Präambel Signatur P₁ für den Kanalisierungscode C₁. Erhält das Endgerät daraufhin kein Antwortsignal auf dem AICH, so wird eine neue Access Preamble AP mit gesteigerter Leistung im nächsten verfügbaren Access Slot AS gesendet. Dabei wird eine neue Präambel-Signatur Pₛ wiederum zufällig ausgewählt. In den gezeigten Ausführungsbeispielen ist das die Präambel-Signatur P₅, d.h. es wird ein Sendeberechtigungsanfragesignal AP bezüglich des Kanalisierungscodes C₅ gesendet.

Dies erfolgt so lange, bis schließlich auf dem AICH ein Antwortsignal AWS empfangen wird. In diesem Antwortsignal ist als Entscheidungswert ACK, NACK ein sog. Acquisition Indicator AIₛ (mit S=0,...,15) enthalten. Dieser Acquisition Indicator AIₛ hat entweder den Wert "1" oder "-1", je nachdem, ob es sich um einen positiven Entscheidungswert ACK handelt, durch den das Endgerät zum Senden auf dem angefragten Kanal bzw. mit dem angefragten Channelization Code Cₛ berechtigt wird oder ob es sich um einen negativen Entscheidungswert NACK handelt, mit dem das Senden mit diesem Channelization Code Cₛ verweigert wird.

Das Antwortsignal wird hierbei so gebildet, dass der jeweilige Acquisition Indicator AIₛ mit einer sogenannten AICH-Signatur-Zeichenfolge bₛ multipliziert wird, wobei jede Signatur-Zeichenfolge bₛ wieder genau einem der 16 Channelization Codes Cₛ zugeordnet ist. Durch die Multiplikation des Acquisition Indicators AIₛ mit der entsprechenden AICH-Signatur-Zeichenfolge bₛ erkennt das Endgerät, ob der empfangene Entscheidungswert ACK, NACK bzw. Acquisition Indicator AIₛ die Antwort auf die von ihm gesendete Access Preamble AP ist.

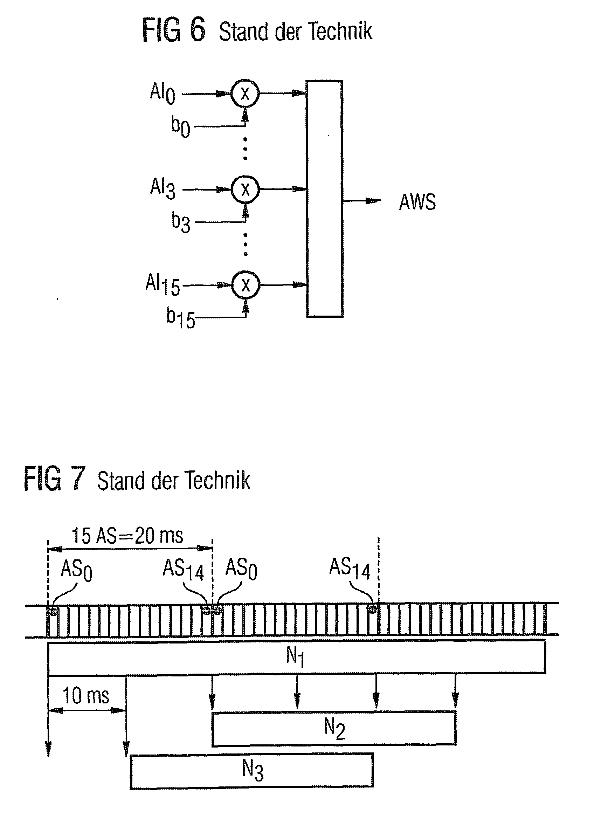

Wie Figur 6 zeigt, es ist möglich, bis zu 16 verschiedene Acquisition Indicator mit dem jeweils zugehörigen AICH-Signatur-Zeichenfolgen bₛ zu multiplizieren und anschließend zu addieren, d.h. es können bis zu 16 Acquisition Indicator AI gleichzeitig in einem Antwortsignal AWS gesendet werden. Die einzelnen AICH-Signatur-Zeichenfolgen bₛ bestehen dabei jeweils aus 32 Werten (siehe Figur 5). Durch bitweise Addition der einzelnen aus der Multiplikation der Acquisition Indicator mit den zugehörigen AICH-Signatur-Zeichenfolgen bₛ entstehen die 32 AICH Symbole a₀,...,a₃₁, wie sie in Figur 1 dargestellt sind.

Sendet die Basisstation auf dem AICH ein Antwortsignal AWS mit einem negativen Entscheidungswert ACK, so bricht das Endgerät das Verfahren ab. Im Beispiel gemäß Figur 2 ist dies ein entsprechender Acquisition Indicator AI₃, der der zuvor vom Endgerät gesendeten Access Preamble P₃ entspricht, mit einem Wert von "-1". Eine bestimmte Zeit später sendet es dann wieder in einem zugelassenen Access Slot mit einer zufällig ausgewählten Präambel-Signatur P₁, P₃, P₅ eine neue Access Preamble AP an die Basisstation, d. h. das Verfahren beginnt von neuem. Ist im Antwortsignal dagegen ein positiver Entscheidungswert ACK enthalten, in Figur 3 der Acquisition Indicator AI₃ = 1, so sendet das Endgerät auf dem PRACH mit dem angefragten Kanalisierungscode C₃ die gewünschte Nachricht N an die Basisstation.

Aus den Figuren 2 und 3 wird sofort ersichtlich, dass dieses Verfahren zwar akzeptabel ist, so lange es nur selten zur Übersendung eines negativen Entscheidungswerts NACK der Basisstation kommt. Nach dem derzeitigen UMTS-Standard ist dies der Fall, da nur dann ein negativer Entscheidungswert NACK gesendet wird, wenn die Hardware der Basisstation nicht mehr in der Lage ist, weitere Daten zu verarbeiten. Die Chancen, dass Nachrichten auf dem PRACH kollidieren, sind folglich relativ gering.

Nach dem derzeitigen Standard dürfen aber auf dem PRACH gesendete Nachrichten nur eine Länge von 10 oder 20 Millisekunden haben. Damit ist eine Kollision zweier Nachrichten unterschiedlicher Endgeräte an eine Basisstation, die zum gleichen Startzeitpunkt beginnen, relativ selten. Hierzu wird auf Figur 7 verwiesen. Wie dort dargestellt ist, beträgt die Dauer eines Radio Frames für die Zugriffspräambeln 20 Millisekunden, wobei in einem Radio Frame 15 Access Slots AS untergebracht sind. Der Beginn einer Nachricht kann immer nur zum Startzeitpunkt eines Access Slots AS liegen. Der für den PRACH-Nachrichtenteil verwendete Scrambling Code hat dagegen eine Länge von 10 Millisekunden. Falls die zu sendende Nachricht N₁, N₂, N₃ länger als 10 Millisekunden ist, wird der Scrambling Code durch Wiederholung verlängert. Dies bedeutet, dass Nachrichten, die mit dem gleichen Channelization Code Cₛ gesendet werden, nicht von der Basisstation unterschieden werden können, wenn die Startzeitpunkte der Nachrichten 10 Millisekunden oder ein ganzzahliges Vielfaches davon auseinander liegen. In diesem Fall werden die gleichzeitigen Nachrichtenteile mit dem gleichen Abschnitt des Scrambling Codes verknüpft und die Nachrichten sind für die Basisstation nicht mehr unterscheidbar. Sie müssen dann erneut gesendet werden. Da sich in einem zeitlichen Rahmen von 20 Millisekunden nur 15 mögliche Startzeitpunkte - die Startzeitpunkte der Access Slots AS - befinden, ergibt sich nach 10 Millisekunden kein möglicher Startzeitpunkt für eine PRACH-Nachricht. Erst nach 20 Millisekunden kann tatsächlich die Situation auftreten, dass eine Nachricht N₃ mit einer weiteren Nachricht N₁ kollidiert, die dann startet und den gleichen Scrambling und Channelization Code verwendet. Um die maximale Nachrichtenlänge auf über 20 Millisekunden zu verlängern und so auch die Übersendung komplexerer Nachrichten auf dem PRACH in effektiver Weise zu erlauben, ist ein aktiveres Kanalmanagement erforderlich. D. h. es sollte geprüft werden, welche Kanäle bereits von anderen Endgeräten genutzt, d. h. blockiert werden. Ein solches aktives Kanalmanagement bringt es aber zwangsläufig mit sich, dass die Anzahl der Zurückweisungen von Sendeberechtigungsanfragesignalen der Endgeräte ansteigt. Somit ist auch unbedingt ein effektiveres Verfahren zur Auswahl eines Übertragungskanals bzw. eines Channelization Codes Cₛ zur Übersendung von Nachrichten N auf dem PRACH Kanal sinnvoll.

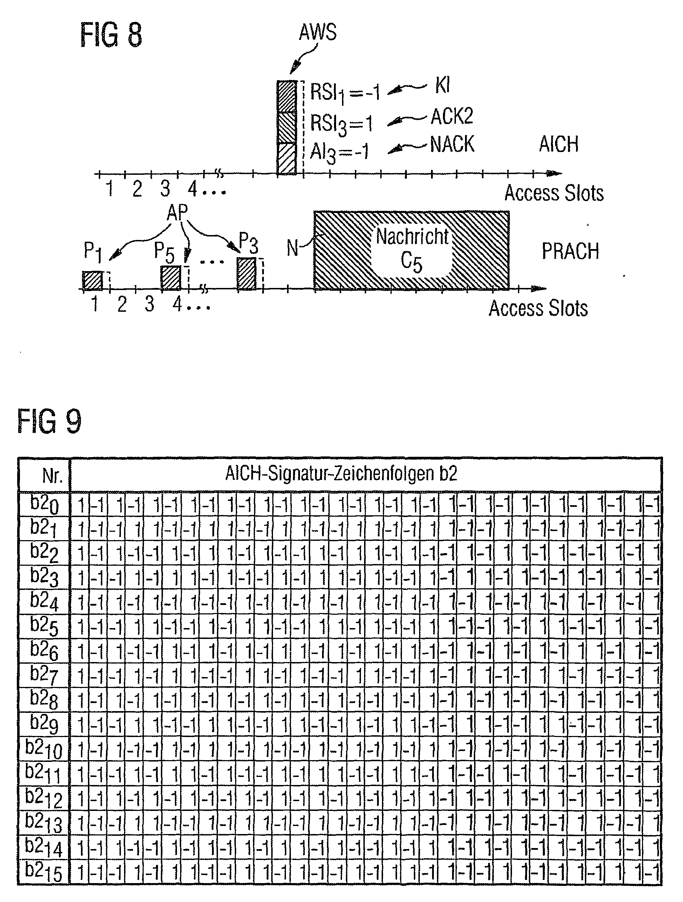

Bei dem vorgeschlagenen erfindungsgemäßen Verfahren wird daher zusätzlich in dem Antwortsignal neben dem ersten Entscheidungswert ACK, NACK, sofern dieser negativ ist, ggf. ein zweiter positiver Entscheidungswert ACK2 an das Endgerät übermittelt, wenn das Endgerät die Möglichkeit hat, auf einem anderen freien Kanal bzw. mit einem anderen freien Channelization Code die Nachricht N zu senden. Außerdem werden bei den dargestellten Ausführungsbeispielen explizit Kanal-Status-Informationen KI an das Endgerät gesandt, anhand derer das Endgerät dann feststellen kann, welcher Kanal genutzt werden könnte. Dies ist in Figur 8 schematisch dargestellt.

Wie ein Vergleich dieser Figur mit den Figuren 2 und 3 zeigt, fragt auch hier das Endgerät jeweils mehrfach mit entsprechenden Access Preamble AP mit unterschiedlichen Präambel-Signaturen P₁, P₂, P₅, die sich auf unterschiedliche Channelization Codes C₁, C₂, C₅ beziehen, bei der Basisstation an, ob eine Nachricht N mit den betreffenden Channelization Codes C₁, C₂, C₅ auf dem PRACH gesendet werden darf. Wie in dem Beispiel gem. Figur 2 erfolgt auch hier auf die letzte Anfrage, bei der die Präambel-Signatur P₃ verwendet wurde, ein Antwortsignal AWS der Basisstation mit einem negativen Entscheidungswert NACK (auch hier wieder AI₃ = -1). Zusätzlich sind im Antwortsignal AWS aber ein zweiter positiver Entscheidungswert ACK2 sowie Kanalinformationen KI enthalten, mit denen dem Endgerät signalisiert wird, dass es eine Nachricht mit dem Channelization Code C₅ senden kann. Daraufhin sendet das Endgerät im nächstfolgenden zugelassenen Access Slot die Nachricht N mit dem Channelization Code C₅. Auf diese Weise werden Abweisungen von Belegungswünschen für den PRACH trotz vorhandener freier Ressourcen durch Senden von zusätzlichen Informationen verhindert.

Die zusätzlichen Informationen werden dabei so im Antwortsignal AWS decodiert, dass das Verfahren vollkommen abwärtskompatibel zum bisherigen UMTS-Verfahren ist. Hierzu werden 16 neue zusätzliche AICH-Signatur-Zeichenfolgen b2₀,...,b2₁₅ definiert. Die AICH-Signatur-Zeichenfolgen dieses zweiten AICH-Signatur-Zeichenfolgen-Sets b2 sind jeweils zueinander orthogonal und orthogonal zu allen bestehenden AICH-Signatur-Zeichenfolgen b₀,...,b₁₅ des ersten AICH-Signatur-Zeichenfolgen-Sets b, mit dem die bisherigen Acquisition Indicator AI codiert werden. Dieses neue AICH-Signatur-Zeichenfolgen-Set b2 ist in Figur 9 dargestellt. Wie ein Vergleich mit Figur 5 zeigt, werden die einzelnen Signatur-Zeichenfolgen b2₀,..., b2₁₅ des zweiten Sets b2 gebildet, indem das Vorzeichen jedes zweiten Wertes der entsprechenden Signatur-Zeichenfolgen b2₀,..., b2₁₅ des ersten "normalen" Signatur-Zeichenfolgen-Sets b umgedreht wird, d.h. der Wert mit "-1" multipliziert wird. Da dieses zweite Signatur-Zeichenfolgen-Set b2 orthogonal zum ersten Signatur-Zeichenfolgen-Set b ist, können mit diesen Signatur-Zeichenfolgen b2₀,..., b2₁₅ zusätzliche Informationen codiert und gemeinsam mit den bisherigen Informationen versendet werden, ohne dass die Übertragung der bisherigen Acquisition Indicator AI verändert wird. Auch die weiteren Verfahrensabläufe, insbesondere der Ablauf des Sendens der Access Preamble AP, bleiben wie beim bisherigen Standard.

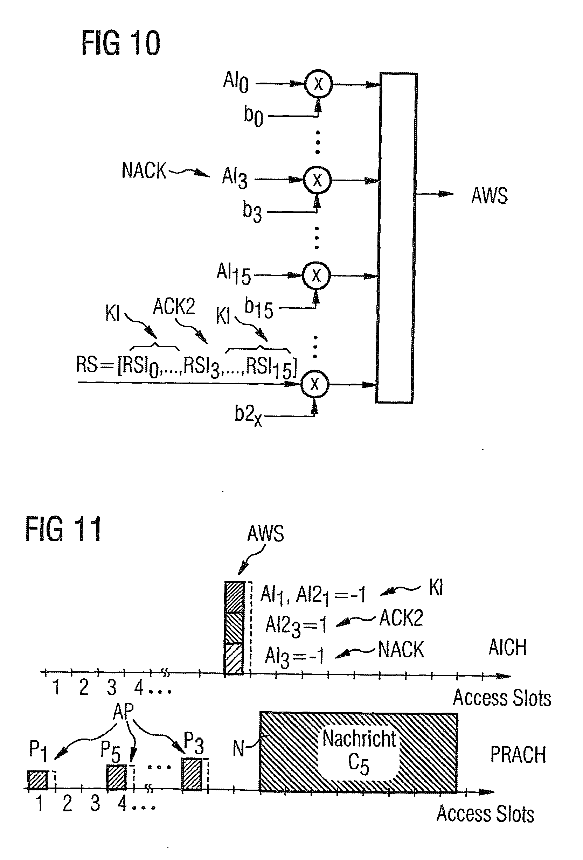

In den Figuren 8 und 10 ist hierbei eine erste Möglichkeit dargestellt, an das Endgerät den zweiten positiven Entscheidungswert ACK2 und die notwendigen Kanalinformationen KI zu übersenden.

Bei dieser Methode sendet die Basisstation im Falle einer Anfrage vom Mobilfunkgerät auf einen bestimmten belegten Channelization Code Cₛ (in Figur 8 der Code C₃) einen negativen Entscheidungswert NACK, d.h. AI₃ = 1, genau wie beim Stand der Technik. Zusätzlich wird eine Kanalstatusinformation KI gesendet, welche aus insgesamt 16 RACH-Status-Indikatoren RSI₀,..., RSI₁₅ besteht, wobei jeder Status-Indikator RSIₛ (mit S=0,...,15) genau einem bestimmten Channelization Code Cₛ zugeordnet ist. Ist der Status-Indikator RSIₛ = -1, so heißt dies, dass der entsprechende Channelization Code Cₛ belegt ist. Ein Status-Indikator RSIₛ = 0 hat die Bedeutung, dass der zugehörige Channelization Code Cₛ frei ist. Den Status des zur gesendeten Präambel-Signatur P_{s'} gehörenden Channelization Code C_{s'} kann das Mobilfunkgerät am empfangenen negativen ersten Entscheidungswert NACK erkennen. Deshalb ist es nicht erforderlich, den zugehörigen Status-Indikator RSI_{s'} innerhalb der Kanalinformation KI mit dem Wert "-1" zu senden. Dieser Status-Indikator RSI_{s'} kann daher dazu genutzt werden, dem Mobilfunkgerät das Recht zu erteilen, eine Nachricht auf einem freien Channelization Code Cₛ zu senden. D.h. es wird mit diesem Wert ein zweiter positiver Entscheidungswert ACK2 gesendet, indem der betreffende Status-Indikator RSI_{s'} = 1 gesetzt wird.

Dabei ist es im Übrigen möglich - wenn die Basisstation gleichzeitig in einem Antwortsignal mehrere negative Entscheidungswerte NACK oder positive Entscheidungswerte ACK in dem gleichen Access Slot AS an verschiedene Endgeräte sendet - die zugehörigen Status-Indikatoren RSI mit dem Wert "0" zu senden. Den Status dieser zugehörigen Channelization Codes Cₛ erhält das betroffene Mobilfunkgerät anhand der für die anderen Mobilfunkgeräte bestimmten ersten Entscheidungswerte NACK, ACK, indem es das übersendete Antwortsignal dahingehend auswertet. Die zugehörigen Cₛ sind dann belegt, obwohl die Status-Indikatoren RSIₛ den Wert "0" haben. D. h. es wird den jeweils gesendeten ersten Entscheidungswerten NACK, ACK, eine höhere Priorität eingeräumt als den Status-Indikatoren RSIₛ.

Insgesamt müssen bei diesem Verfahren - sofern an ein Endgerät ein erster negativer Entscheidungswert NACK gesendet wird und ein zweiter positiver Entscheidungswert ACK2 gesendet werden soll - maximal 16 verschiedene Status-Indikatoren RSI_{s'} ..., RSI₁₅ übermittelt werden. Figur 10 zeigt hierzu, wie die Codierung und Übersendung im Antwortsignal AWS an die Basisstation erfolgen kann. Aus den einzelnen Status-Indikatoren RSI_{s'} ..., RSI₁₅ wird eine Status-Indikator-Zeichenfolge RS gebildet, welche die Länge 16 hat. Diese Zeichenfolge RS kann dann mit einer AICH-Signatur-Zeichenfolge b2₀, ...,b2₁₅ aus dem zweiten AICH-Signatur-Zeichenfolgen-Set b2ₛ codiert werden. Wegen der Orthogonalität dieser zusätzlichen Signatur-Zeichenfolge zu dem ersten Signatur-Zeichenfolgen-Set b kann die entstehende Zeichenfolge dann ohne Beeinflussung der übersendeten ersten Entscheidungswerte bzw. Acquisition Indicator AI₀,...,AI₁₅ im Antwortsignal AWS mit aufaddiert werden. Hierzu wird nur eine einzige, im Prinzip frei wählbare Signatur-Zeichenfolge b2ₓ aus dem zweiten Signatur-Zeichenfolgen-Set b2 benötigt, wobei vorzugsweise diese Signaturzeichenfolge b2ₓ der betreffenden Basisstation zugeordnet ist.

Im konkreten Ausführungsbeispiel gem. Figur 8 wird der dem angefragten Channelization Code C₃ entsprechende Status-Indikator RSI₃ = 1 gesetzt. Dies entspricht einem positiven zweiten Entscheidungswert ACK2. Außerdem wird als zusätzliche Kanal-Status-Information KI ein Status-Indikator RSI₁ = -1 gesendet, was bedeutet, dass der Channelization Code C₁ ebenfalls belegt ist. Da einerseits aufgrund des ersten negativen Entscheidungswerts NACK bereits bekannt ist, dass auch der Channelization Code C₃ belegt ist und dem Endgerät nur die Channelization Codes C₁, C₅, C₃ zur Verfügung stehen, andererseits aber dem Endgerät mit dem zweiten positiven Entscheidungswert ACK2 signalisiert wurde, dass es auf einem freien Kanal senden darf, bleibt zum freien Versenden lediglich noch der Channelization Code C₅, der daraufhin vom Endgerät zum Übersenden der Nachricht N benutzt wird.

Im Folgenden wird noch einmal beschrieben, inwieweit zur Änderung des Zufallszugriffs-Verfahrens Modifikationen in der Basisstation und dem Endgerät selber erforderlich sind:

Nachdem die Basisstation einen Belegungswunsch in Form einer Access Preamble AP mit der Präambel-Signatur P_{s'} empfangen hat, prüft sie, ob der zugehörige Channelization Code C_{s'} des PRACH belegt ist oder nicht.

Wenn der Channelization Code C_{s'} frei ist, sendet die Basisstation wie nach Stand der Technik einen Acquisition Indicator AI_{s'} = 1.

Wenn der Channelization Code C_{s'} belegt ist, sendet die Basisstation ein NACK auf dem AICH, d. h. einen Acquisition Indicator AI_{s'} = -1. Der Acquisition Indicator AI_{s'} wird dabei jeweils mit einer AICH-Signatur-Zeichenfolge b_{s'} aus dem üblichen ersten Signatur-Zeichenfolgen-Set b gesendet, die zu der vom Mobilfunkgerät gesendeten Preamble Signature Pₛ und damit zu dem belegten Channelization Code C_{s'} gehört.

Ist nur der angefragte Channelization Code C_{s'} belegt, wird zusätzlich zu dem NACK die zusätzliche Status-Indikator-Zeichenfolge RS gesendet. Dabei enthält nur der zum angefragten Channelization Code C_{s'} gehörige RSI_{s'} den Wert "1". Dies ist der zweite positive Entscheidungswert ACK2. Alle anderen RSIₛ werden mit den Wert 0 gesendet, d. h. es wird dort "nichts" gesendet. Dadurch erkennt das Mobilfunkgerät, dass nur der Channelization Code C_{s'} belegt ist und dass es sich einen freien Channelization Code Cₛ aussuchen und mit diesem seine Nachricht N senden darf.

Ist mindestens ein Channelization Code Cₛ frei und sind zusätzlich zum angefragten Channelization Code C_{s'} noch weitere Channelization Codes C_{s"} belegt, so sendet die Basisstation ebenfalls mit dem ersten negativen Entscheidungswert NACK eine Status-Indikator-Zeichenfolge RS. Der zum angefragten Channelization Code C_{s'} gehörige Statuswert RSI_{s'} erhält wieder den Wert "1" als zweiter positiver Entscheidungswert ACK2. Die zu belegten Channelization Codes C_{s"} gehörende RSI_{s"} (für die zeitgleich kein negativer Entscheidungswert ACK und positiver Entscheidungswert NACK an ein anderes Endgerät gesendet wird) erhalten den Wert "-1" (C_{s"} ist belegt). Alle anderen Statuswerte RSIₛ erhalten den Wert "0" (Cₛ ist frei). Dafür verwendet die Basisstation jeweils eine zuvor fest definierte Signatur b2ₓ aus dem zweiten Signatur-Zeichenfolgen-Set b2. Da die zusätzliche Status-Indikator-Zeichenfolge RS mit dem gleichen Scrambling Code wie der AICH verwürfelt wird, kann man ihn logisch als Teil des AICH betrachten.

Wenn alle Channelization Codes belegt sind, wird wie in üblicher Weise nur ein negativer Entscheidungswert NACK gesendet und keine zusätzliche Status-Indikator-Zeichenfolge RS.

Nachdem die Basisstation an ein Endgerät eine Status-Indikator-Zeichenfolge RS gesendet hat, erwartet sie 3 oder 4 Access Slots nach Erhalt der letzten Access Preamble eine Nachricht N von dem betreffenden Endgerät mit einem der nicht belegten Channelization Codes Cₛ. Dabei werden vom Endgerät Channelization Codes Cₛ mit kleinerem Index "S" bevorzugt verwendet. Dadurch wird die Suche der Basisstation nach den verwendeten Channelization Code Cₛ beschleunigt. Schnellstmöglich bestimmt die Basisstation den tatsächlich verwendeten Channelization Code Cₛ und sperrt diesen für die anderen Mobilfunkgeräte für den Zeitraum, in dem das Mobilfunkgerät seinen PRACH-Nachrichtenteil sendet.

Der zweite positive Entscheidungswert ACK2 wird benötigt, um das sendeberechtigte Mobilfunkgerät zu kennzeichnen. Wenn mehrere Mobilfunkgeräte gleichzeitig Belegungswünsche senden, deren Preamble Signatures P_{s'} zu belegten Channelization Codes C_{s'} gehören, dann wird dadurch verhindert, dass alle Mobilfunkgeräte nach Erhalt eines ersten negativen Entscheidungswerts NACK mit dem Senden einer Nachricht beginnen. Nur das Mobilfunkgerät, welches den zu "seiner" Preamble Signatur P_{s'} gehörenden zweiten positiven Entscheidungswert ACK2 empfängt, darf mit dem Senden der Nachricht beginnen.

Für das Mobilfunkgerät stellt sich dieses Verfahren wie folgt dar:
1. Das Mobilfunkgerät decodiert wie beim Stand der Technik den BCH, der von der Basisstation in dieser Zelle gesendet wird, und erhält unter anderem die für sie erlaubten Access Slots und die Preamble Signatures sowie den Scrambling Code für die Access Preamble.
2. Das Mobilfunkgerät wählt wie üblich zufällig einen Access Slot AS und eine Preamble Signature P_{s'} aus den für sie erlaubten aus und sendet eine entsprechende Access Preamble AP mit einer berechneten Leistung.
3. Das Mobilfunkgerät decodiert dann den AICH und sucht den zu seiner gesendeten Access Preamble P_{s'} gehörenden Aquisition Indicator AI_{s'} und speichert das Signal des empfangenen AICH inklusive einer eventuell empfangen Status-Indikator-Zeichenkette RS.
   Wenn ein erster positiver Entscheidungswert ACK, d. h. AI_{s'} = 1, empfangen wird beginnt das Mobilfunkgerät 3 oder 4 Access Slots nach dem Senden der letzten Access Preamble seine Nachricht N auf dem PRACH mit dem zur zuletzt gesendeten Preamble Sigature P_{s'} gehörigen Channelization Code C_{s'} zu senden. Das gespeicherte Signal des AICH wird gelöscht.
   Wenn ein erster negativer Entscheidungswert NACK, d. h. AI_{s'} = -1 empfangen wird, wertet das Mobilfunkgerät die Status-Indikator-Zeichenkette RS im gespeicherten Signal aus. Jeder Status-Indikator RSI_{s"} mit dem Wert "-1" gehört zu einem momentan belegten Channelization Code Cₛ. Diese Channelization Codes Cₛ werden vorübergehend aus der Liste der für dieses Mobilfunkgerät zur Verfügung stehenden Channelization Codes gestrichen. Zusätzlich wird nach ersten negativen Entscheidungswerten NACK und zweiten positiven Entscheidungswerten ACK gesucht, die nicht zur gesendeten Preamble Signature P_{s'} gehören. Die zugehörigen Channelization Codes werden ebenfalls vorübergehend gestrichen.
   Es bestehen dann folgende Möglichkeiten:
   a) Ist noch ein verfügbarer Channelization Code Cₛ vorhanden, wählt das Mobilfunkgerät diesen aus. Sind mehrere Channelization Codes Cₛ vorhanden, wählt das Mobilfunkgerät den Channelization Code Cₛ mit dem kleinsten Index "S" aus. Anschließend beginnt das Mobilfunkgerät 3 oder 4 Access Slots nach dem Senden der letzten Access Preamble, seine Nachricht auf dem PRACH mit dem gewählten Channelization Code zu senden.
   b) Ist kein verfügbarer Channelization Code Cₛ vorhanden, beendet das Mobilfunkgerät den Zugriffsversuch.
   c) Wurde der zu Pₛ gehörende Status-Indikator RSIₛ nicht mit dem Wert "1" empfangen, beendet das Mobilfunkgerät ebenfalls den Zugriffsversuch. Dies ist der Fall, wenn z. B. alle Channelization Codes Cₛ belegt sind oder wenn die Basisstation diese neue Funktionalität nicht unterstützt. Dadurch wird die Kompatibilität der Mobilfunkgeräte mit neuer Technik zu den Basisstationen nach dem bisherigen Stand der Technik gewährleistet.
4. Wenn kein erster negativer oder positiver Entscheidungswert ACK, NACK empfangen wird, wählt das Mobilfunkgerät wie bisher zufällig eine neue Präambel-Signatur aus den für sie erlaubten aus und sendet eine neue Access Preamble AP mit einer erhöhten Leistung in dem nächsten für sie verfügbaren Access Slot.

Bei einer alternativen Methode sendet die Basisstation im Falle einer Anfrage vom Endgerät auf einen belegten Channelization Code C_{s'} wie üblich den herkömmlichen negativen Entscheidungswert NACK. Zusätzlich werden noch einer oder mehrere negative Entscheidungswerte NACK2 gesendet, und zwar für jeden weiteren belegten Channelization Code C_{s"} einen eigenen negativen Entscheidungswert NACK2, sofern nicht ohnehin innerhalb des Antwortsignals AWS bereits ein passender erster Entscheidungswert ACK, NACK gesendet wird. Dies ist in Figur 11 dargestellt. Hier wird auf die Anfrage nach dem Channelization Code C₃ (durch Codierung der Access Preamble AP mit der Präambel-Signatur P₃) der übliche negative Entscheidungswert NACK in Form eines Acquisition Indicators AI₃ = -1 gesendet. Außerdem wird ein zweiter positiver Entscheidungswert ACK2 in Form eines zweiten Acquisition Indicators AI2₃ = 1 gesendet. Als Kanalstatusinformation wird außerdem für alle weiteren Kanäle C_{s"}, welche für das betreffende Endgerät von Interesse sind, hier für den Channelization Code C₁, ein entsprechender Acquisition Indicator AI₁ gesandt, sofern der betreffende Channelization Code C_{s"} belegt ist.

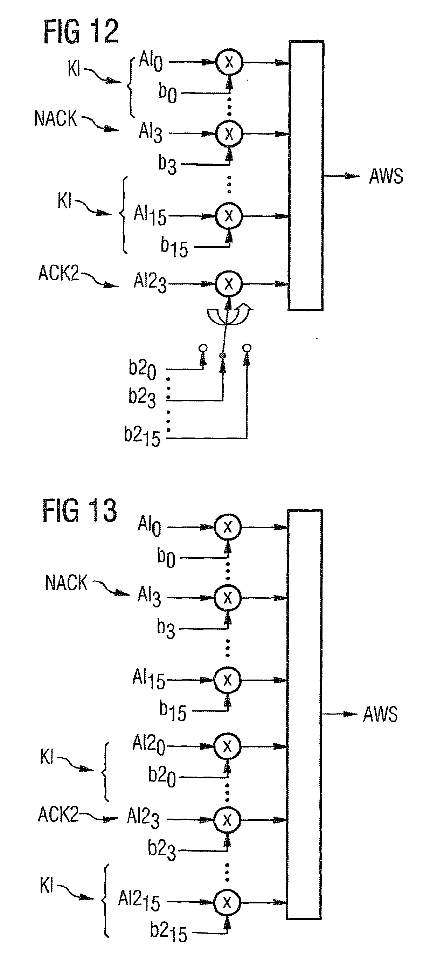

Die Codierung des zweiten positiven Entscheidungswerts ACK2 erfolgt dabei auf jeden Fall mit Hilfe einer AICH-Signatur-Zeichenfolge aus dem zweiten Set b2. Für die Übertragung der übrigen Acquisition Indicator als zusätzliche Kanal-Status-informationen KI können dagegen wahlweise, wie in Figur 12, die entsprechenden dem Channelization Code C₁,...,C₁₅ zugeordneten Signaturzeichenfolgen b₀,...,b₁₅ des ersten Sets b verwendet werden oder, wie in Figur 13, die Signaturzeichenfolgen b2₀,..., b2₁₅ des zweiten Sets b2.

Das heißt, bei der Variante gem. Figur 12 wird nur eine einzige Signatur-Zeichenfolge b2₀,..., b2₁₅ des zweiten Sets b2 verwendet und hiermit der zweite positive Entscheidungswert ACK2 in Form des zusätzlichen Acquisition Indicator AI2₃ übersandt. Als Kanalstatusinformationen KI werden wie üblich negative erste Entscheidungswerte AI₀,..., AI₁₅ entsprechend mit den AICH-Signatur-Zeichenfolgen b₀,..., b₁₅ des ersten Sets b codiert und daraus das Antwortsignal AWS gebildet.

Bei der Variante gem. Figur 13 werden dagegen sämtliche Kanal-Status-Informationen KI als zweite Acquisition Indicator AI2₀,..., AI2₁₅ mit AICH-Signatur-Zeichenfolgen b2₀,..., b2₁₅ des zweiten Sets b2 codiert und gemeinsam mit den ersten Entscheidungswerten bzw. Acquisition Indicator im Antwortsignal AWS versendet.

Um diese Übertragungsverfahren durchzuführen, werden folgende Modifikationen in der Basisstation vorgenommen:

Nachdem die Basisstation einen Belegungswunsch in Form einer Access Preamble AP mit der Preamble Signature Pₛ, empfangen hat, prüft sie, ob der zugehörige Channelization Code C_{s'} des PRACH belegt ist oder nicht.

Wenn der angefragte Channelization Code C_{s'} frei ist, sendet die Basisstation in herkömmlicher Weise einen ersten positiven Entscheidungswert ACK, d. h. AI_{s'} = 1, auf dem AICH.

Wenn der angefragte Channelization Code C_{s'} belegt ist, sendet die Basisstation in gleicher Weise und mit gleicher Codierung einen ersten negativen Entscheidungswert NACK, d. h. AI_{s'} = -1.

Wenn weitere Channelization Codes C_{s"} belegt sind, aber mindestens ein Channelization Code Cₛ frei ist, sendet die Basisstation für jeden weiteren belegten Channelization Code C_{s"} einen zweiten negativen Entscheidungswert NACK2 auf dem AICH. D. h. die Basisstation sendet einen Wert AI_{s"} = -1 mit einer AICH-Signatur-Zeichenfolge, die zu den Channelization Code C_{s"} gehört, der momentan belegt ist.

Dabei wählt die Basisstation in einer ersten Variante zur Kodierung jeweils eine AICH-Signatur-Zeichenfolge b₀,...,b₁₅ aus dem ersten Signatur-Zeichenfolgen-Set b. Diese Methode hat den Vorteil, dass, wenn ein erstes Mobilfunkgerät eine Access Preamble AP sendet, dessen Präambel-Signatur P_{s'} zu einem belegten Channelization Code C_{s'} gehört und die Basisstation in diesem Moment zu einem anderen, zweiten Mobilfunkgerät das Set der belegten Channelization Codes C_{s"} in Form der zweiten negativen Entscheidungswerte NACK2 sendet. Dadurch wird gleichzeitig auch der Belegungswunsch des ersten Mobilfunkgeräts negativ bestätigt, selbst wenn die Basisstation den Belegungswunsch des ersten Mobilfunkgerät noch nicht empfangen hat. Das verkürzt die Zeit zwischen dem Senden der Access Preamble AP und dem Empfangen des negativen Entscheidungswerts NACK.

Bei einer zweiten Variante wird jeweils eine Signatur-Zeichenfolge b2₀,...,b2₁₅ aus dem zweiten Signatur-Zeichenfolgen-Set b2 gewählt. Diese Methode hat den Vorteil, dass, wenn ein erstes Mobilfunkgerät eine Access Preamble AP sendet, dessen Preamble Signature P_{s'} zu einem belegten Channelization Code C_{s'} gehört, und die Basisstation in diesem Moment zu einem anderen Mobilfunkgerät das Set der belegten Channelization Codes C_{s"} in Form der zweiten negativen Entscheidungswerte NACK2 sendet, der Belegungswunsch des ersten Mobilfunkgeräts durch den Empfang der zweiten negativen Entscheidungswerte NACK2 nicht negativ bestätigt wird, da diese mit einer AICH-Signatur-Zeichenfolge b2₀,...,b2₁₅ aus dem neuen Signatur-Zeichenfolgen-Set b2 gesendet wurden und das erste Mobilfunkgerät eine Antwort mit einer AICH-Signatur-Zeichenfolge b₀,...,b₁₅ aus dem ersten Signatur-Zeichenfolgen-Set b erwartet. Möglicherweise ist zu dem Zeitpunkt, in dem die Basistation die Anfrage des ersten Mobilfunkgeräts verstanden hat, der gewünschte Channelization Code C_{s'} wieder frei, so dass das Mobilfunkgerät seine Nachricht senden kann. Dass verringert die Anzahl der zusätzlichen Zufallszugriff-Versuche.

Ist mindestens ein Channelization Code Cₛ frei, so sendet die Basisstation mit einer AICH-Signatur-Zeichenfolge b2_{s'} aus dem zweiten Set b2, die zu der empfangenen Präambel-Signatur P_{s'} gehört, einen zweiten positiven Entscheidungswert ACK2, in Form eines zusätzlichen Acquisition Indicator AI2_{s'} = 1.

Wenn alle Channelization Codes belegt sind, wird nur ein erster negativer Entscheidungswert NACK mit der üblichen entsprechenden AICH-Signatur-Zeichenfolge b_{s'} gesendet und kein positiver zweiter Entscheidungswert ACK2.

Nachdem die Basisstation einen positiven zweiten Entscheidungswert ACK2 gesendet hat, erwartet sie 3 oder 4 Access Slots AS nach Erhalt der letzten Access Preamble AP eine Nachricht N mit einem der nicht belegten Channelization Codes Cₛ. Auch bei diesem Verfahren werden wieder Channelization Codes Cₛ mit kleinerem Index "S" bevorzugt verwendet, um die Suche der Basisstation nach dem verwendeten Channelization Code Cₛ zu beschleunigen. Schnellstmöglich bestimmt die Basisstation den tatsächlich verwendeten Channelization Code Cₛ und sperrt diesen für die anderen Mobilfunkgeräte für den Zeitraum, in dem das betreffende Mobilfunkgerät seinen PRACH-Nachrichtenteil N sendet.

Bezüglich des Mobilfunkgeräts wird die herkömmliche Prozedur wie folgt modifiziert:
1. Das Mobilfunkgerät decodiert wie üblich den BCH, der von der Basisstation zu jedem Mobilfunkgerät dieser Zelle gesendet wird, um die für sie erlaubten Access Slots AS und Präambel-Signaturen Pₛ sowie den Scrambling Code für die Access Preamble AP zu erfahren.
2. Das Mobilfunkgerät wählt wie bisher zufällig einen Access Slot AS und eine Präambel-Signatur P_{s'} aus den für sie erlaubten aus und sendet eine Access Preamble AP.
3. Das Mobilfunkgerät decodiert den AICH, sucht den zu seiner gesendeten Access Preamble P_{s'} gehörenden Acquisition Indicator AI_{s'} und speichert das Signal des empfangenen AICH. Es gibt dann wieder folgende Möglichkeiten:
   a) Wenn ein Acquisition Indicator AI_{s'} = 1 empfangen wird, beginnt das Mobilfunkgerät 3 oder 4 Accesss Slots nach dem Senden der letzten Access Preamble seine Nachricht auf dem PRACH mit dem Channelization Code C_{s'} zu senden. Das gespeicherte Signal des AICH wird gelöscht.
   b) Wenn ein Aquisition Indicator AIₛ = -1 empfangen wird, hat die Basisstation den Belegungswunsch negativ bestätigt. Dann sucht das Mobilfunkgerät im gespeicherten Signal nach einem zweiten positiven Entscheidungswert ACK2, d. h. nach einem zusätzlichen Aquisition Indicator AI2_{s'} = 1.
      Wurde ein zweiter positiver Entscheidungswert ACK2 detektiert, so werden alle im gespeicherten Signal enthaltenen Entscheidungswerte NACK, NACK2, ACK detektiert. Zu jedem dieser Entscheidungswerte NACK, NACK2 und ACK gehört ein Channelization Code C_{s"}, der momentan nicht zur Verfügung steht. Diese Channelization Codes C_{s"} werden vorübergehend aus der Liste der für dieses Mobilfunkgerät zur Verfügung stehenden Channelization Codes gestrichen.
      Ist noch ein verfügbarer Channelization Code Cₛ vorhanden, wählt das Mobilfunkgerät diesen aus. Sind mehrere Channelization Codes Cₛ vorhanden, wählt das Mobilfunkgerät den mit dem kleinsten Index "S" aus. Anschließend beginnt das Mobilfunkgerät 3 oder 4 Access Slots nach dem Senden der letzten Access Preamble seine Nachricht N auf dem PRACH mit dem gewählten Channelization Code Cₛ zu senden.
      Ist kein verfügbarer Channelization Code Cₛ vorhanden, beendet das Mobilfunkgerät den Zugriffsversuch.
      Wurde kein zweiter positiver Entscheidungswert ACK2 detektiert, beendet das Mobilfunkgerät ebenfalls den Zugriffsversuch.
4. Wenn überhaupt kein Antwortsignal AWS empfangen wird, wählt das Mobilfunkgerät wie üblich eine neue Präambel-Signatur P_{s'} aus den für sie erlaubten aus und sendet die neue Access Preamble AP mit einer erhöhten Leistung in dem nächsten für sie verfügbaren Access Slot.

Durch den Einsatz der erfindungsgemäßen Verfahren ergeben sich folgende Vorteile:

Ein Hauptvorteil ist, dass die Nutzung des PRACH als eine mögliche Ressource innerhalb des UMTS-Netzes effektiver wird, da Belegungswünsche nur dann abgewiesen werden, wenn tatsächlich keine PRACH Ressourcen mehr frei sind. Anstelle der Abweisung des Belegungswunsches wird dem betreffenden Mobilfunkgerät signalisiert, auf welchem freien Kanal es stattdessen seine Nachricht an die Basisstation senden kann. Darüber hinaus hat das Verfahren den großen Vorteil, dass die Mobilfunkgeräte und die Basisstationen, die nach dem bisherigen Stand der Technik (d.h. nach der derzeit geltenden UMTS-Norm) arbeiten, unverändert mit jeweils entsprechenden Basisstationen bzw. Mobilfunkgeräten kommunizieren können, welche die erfindungsgemäße Funktionalität nutzen. Sofern ein Belegungswunsch in Form einer Access Preamble von einer Basisstation nicht empfangen wurde, entsteht durch die erfindungsgemäße Prozedur kein zusätzlicher Signalisierungsaufwand gegenüber dem jetzigen Stand der Technik. Das gleiche ist der Fall, wenn der Belegungswunsch in Form einer Access Preamble von der Basisstation positiv bestätigt wird. Ein zusätzlicher Signalisierungsaufwand durch das Senden des zweiten positiven Entscheidungswerts sowie der zusätzlichen Kanalstatusinformationen erfolgt nur, wenn auch der Nutzen dieser zusätzlichen Signalisierung gegeben ist, d. h. wenn tatsächlich ein Channelization Code frei ist und gegenüber dem herkömmlichen Verfahren ein früheres Senden der Nachricht durch das Endgerät möglich ist. Sind dagegen alle Channelization Codes belegt, entsteht kein zusätzlicher Signalisierungsaufwand, da lediglich wie bisher der erste negative Entscheidungswert NACK gesendet werden muss und einfach auf die Sendung eines zweiten positiven Entscheidungswerts verzichtet wird.

Ein weiterer Vorteil besteht darin, dass die Zuweisung von Zugriffsprioritäten aufgrund verschiedener Access Service Classes (ASC, Zugriffs-Service-Klassen) im bisherigen UMTS-Standard durch den Einsatz dieser Methoden nicht beeinflusst wird. Es werden nur die anhand der ASC vorgegebenen Channelization Codes verwendet.

## Patentansprüche

1. Verfahren zur Auswahl eines Übertragungskanals zur Übertragung von Nachrichten (N) von einem mobilen Endgerät an eine Basisstation, bei dem
- das Endgerät zunächst ein Sendeberechtigungs-Anfragesignal (AP) für einen bestimmten Übertragungskanal an die Basisstation sendet
- und die Basisstation ein Antwortsignal (AWS) an das Endgerät aussendet, welches einen ersten Entscheidungswert (ACK, NACK) enthält, mit dem dem Endgerät signalisiert wird, ob es zum Senden einer Nachricht (N) auf dem angefragten Übertragungskanal berechtigt ist oder nicht,
**dadurch gekennzeichnet, dass**
- die Basisstation bei Übermittlung eines ersten negativen Entscheidungswerts (NACK), mit welchem dem Endgerät das Senden einer Nachricht (N) auf dem angefragten Übertragungskanal verweigert wird, mit dem Antwortsignal (AWS) einen zweiten positiven Entscheidungswert (ACK2) an das Endgerät sendet, wenn das Endgerät zum Senden einer Nachricht (N) auf einem anderen Übertragungskanal berechtigt ist,
- und das Endgerät bei einer Detektion eines ersten negativen Entscheidungswerts (NACK) im Antwortsignal (AWS) das Antwortsignal (AWS) dahingehend weiter analysiert, ob es einen zweiten positiven Entscheidungswert (ACK2) enthält, mit dem dem Endgerät eine Berechtigung zum Senden einer Nachricht auf einem anderen Übertragungskanal signalisiert wird, und welche anderen Übertragungskanäle hierfür zur Verfügung stehen,
- und das Endgerät dann die Nachricht (N) auf einem der zur Verfügung stehenden Übertragungskanäle an die Basisstation sendet.

2. Verfahren nach Anspruch 1, **dadurch gekennzeichnet, dass** der auszuwählende Übertragungskanal einer von mehrerer logischen Übertragungskanälen ist, welche durch Verwendung unterschiedlicher Kanalisierungscodes (Cₛ) auf einem von mehreren Endgeräten gemeinsam zur Übermittlung von Nachrichten (N) an eine Basisstation genutzten physikalischen Übertragungskanal (PRACH) realisiert werden.

3. Verfahren nach Anspruch 1 oder 2, **dadurch gekennzeichnet, dass** das Antwortsignal (AWS) Kanal-Status-Informationen (KI) enthält, mit denen dem betreffenden Endgerät signalisiert wird, welche anderen Übertragungskanäle zum Senden einer Nachricht (N) zur Verfügung stehen.

4. Verfahren nach einem der Ansprüche 1 bis 3, **dadurch gekennzeichnet, dass** der zweite positive Entscheidungswert (ACK2) und/oder die Kanal-Status-Informationen (KI) mittels zumindest einer Signatur-Zeichenfolge (b2₀,...,b2₁₅) eines zweiten Signatur-Zeichenfolgen-Sets (b2) im Antwortsignal (AWS) codiert werden, die orthogonal zu Signatur-Zeichenfolgen (b₀,...,b₁₅) eines ersten Signatur-Zeichenfolgen-Sets (b) ist, welche zur Codierung des ersten Entscheidungswerts (ACK, NACK) im Antwortsignal (AWS) genutzt werden.

5. Verfahren nach Anspruch 4, **dadurch gekennzeichnet, dass** die Signatur-Zeichenfolge (b2₀,...,b2₁₅) zur Codierung des zweiten positiven Entscheidungswerts (ACK2) und/oder der Kanalstatusinformationen (KI) erzeugt wird, indem jedes zweite Zeichen einer Signatur-Zeichenfolge (b₀,...,b₁₅) des ersten Signatur-Zeichenfolgen-Sets (b) mit "-1" multipliziert wird.

6. Verfahren nach Anspruch 5, **dadurch gekennzeichnet, dass** die Signatur-Zeichenfolgen (b2₀,...,b2₁₅) des zweiten Signatur-Zeichenfolgen-Sets (b2) jeweils aus den Signatur-Zeichenfolgen (b₀,...,b₁₅) des ersten Signatur-Zeichenfolgen-Sets (b) durch Multiplikation jedes zweiten Zeichens mit "-1" erzeugt wurden.

7. Verfahren nach einem der Ansprüche 4 bis 6, **dadurch gekennzeichnet, dass** der zweite positive Entscheidungswert (ACK2) gemeinsam mit den Kanalstatusinformationen (KI) in einer Zeichenkette (RS) übermittelt wird, welche mit einer einer Signatur-Zeichenfolge (b2ₓ) des zweiten Signatur-Zeichenfolgen-Sets (b2) codiert wird.

8. Verfahren nach Anspruch 7, **dadurch gekennzeichnet, dass** die zur Codierung der Zeichenkette (RS) verwendete Signatur-zeichenfolge (b2ₓ) der Basisstation zugeordnet ist.

9. Verfahren nach einem der Ansprüche 4 bis 6, **dadurch gekennzeichnet, dass** der zweite positive Entscheidungswert (ACK2) für ein bestimmtes Endgerät mit einer bestimmten Signatur-Zeichenfolge (b2ₓ) des zweiten Signatur-Zeichenfolgen-Sets (b2) codiert wird, welche dem Übertragungskanal zugeordnet ist, für den das betreffende Endgerät zuvor ein Sendeberechtigungs-Anfragesignal (AP) an die Basisstation gesandt hat.

10. Verfahren nach einem der Ansprüche 2 bis 9, **dadurch gekennzeichnet, dass** das Antwortsignal (AWS) als Kanalstatusinformationen (KI) für jeden zu dem betreffenden Zeitpunkt belegten Übertragungskanal einen zweiten negativen Entscheidungswert (NACK2) enthält.

11. Verfahren nach Anspruch 10, **dadurch gekennzeichnet, dass** die zweiten negativen Entscheidungswerte (NACK2) jeweils mit den den betreffenden belegten Übertragungskanälen zugeordneten Signatur-Zeichenfolgen aus dem ersten Set (b) von Signatur-Zeichenfolgen kodiert werden.

12. Verfahren nach Anspruch 10, **dadurch gekennzeichnet, dass** die zweiten negativen Entscheidungswerte (NACK2) jeweils mit Signaturzeichenfolgen aus dem zweiten Set (b2) von Signatur-Zeichenfolgen codiert werden, welche jeweils den betreffenden belegten Übertragungskanälen zugeordnet sind.

13. Verfahren zur Auswahl eines Übertragungskanals zur Übertragung von Nachrichten (N) von einem mobilen Endgerät an eine Basisstation, bei dem
- die Basisstation vom Endgerät zunächst ein Sendeberechtigungs-Anfragesignal (AP) für einen bestimmten Übertragungskanal empfängt,
- und die Basisstation dann ein Antwortsignal (AWS) an das Endgerät aussendet, welches einen ersten Entscheidungswert (ACK, NACK) enthält, mit dem dem Endgerät signalisiert wird, ob es zum Senden einer Nachricht (N) auf dem angefragten Übertragungskanal berechtigt ist oder nicht,
**dadurch gekennzeichnet,**
**dass** die Basisstation bei Übermittlung einen ersten negativen Entscheidungswert (NACK), mit welchem dem Endgerät das Senden einer Nachricht (N) auf dem angefragten Übertragungskanal verweigert wird, mit dem Antwortsignal (AWS) einen zweiten positiven Entscheidungswert (ACK2) an das Endgerät sendet, wenn das Endgerät zum Senden einer Nachricht (N) auf einem anderen Übertragungskanal berechtigt ist.

14. Verfahren zur Auswahl eines Übertragungskanals zur Übertragung von Nachrichten (N) von einem mobilen Endgerät an eine Basisstation, bei dem
- das Endgerät zunächst ein Sendeberechtigungs-Anfragesignal (AP) für einen bestimmten Übertragungskanal an die Basisstation sendet,
- und von der Basisstation ein Antwortsignal (AWS) empfängt,
- und in dem Antwortsignal (AWS) einen ersten Entscheidungswert (ACK, NACK) detektiert, mit dem dem Endgerät signalisiert wird, ob es zum Senden einer Nachricht (N) auf dem angefragten Übertragungskanal berechtigt ist oder nicht,
**dadurch gekennzeichnet,**
**dass** das Endgerät bei einer Detektion eines ersten negativen Entscheidungswerts (NACK), mit welchem dem Endgerät das Senden einer Nachricht (N) auf dem angefragten Übertragungskanal verweigert wird, das Antwortsignal (AWS) dahingehend analysiert, ob es einen zweiten positiven Entscheidungswert (ACK2) enthält, mit dem dem Endgerät eine Berechtigung zum Senden einer Nachricht (N) auf einem anderen Übertragungskanal signalisiert wird und welche anderen Übertragungskanäle hierfür zur Verfügung stehen,
und das Endgerät dann die Nachricht (N) auf einem der zur Verfügung stehenden Übertragungskanäle an die Basisstation sendet.

15. Basisstation mit einer Sende/Empfangseinheit und einer Prozessoreinrichtung mit Mitteln zur Auswahl eines Übertragungskanals zur Übertragung von Nachrichten (N) von einem mobilen Endgerät an die Basisstation, umfassend
- eine Decodiereinrichtung zur Erkennung eines von einem Endgerät übersendeten Sendeberechtigungs-Anfragesignals (AP) für einen bestimmten Übertragungskanal,
- eine Kanalfreigabeeinrichtung, um zu ermitteln, welche Übertragungskanäle aktuell für eine Übersendung einer Nachricht (N) zur Verfügung stehen,
- und eine Codiereinrichtung, um ein Antwortsignal (AWS) an das Endgerät auszusenden, welches einen ersten Entscheidungswert (ACK, NACK) enthält, mit dem dem Endgerät signalisiert wird, ob es zum Senden einer Nachricht (N) auf dem angefragten Übertragungskanal berechtigt ist oder nicht,
**dadurch gekennzeichnet,**
**dass** die Prozessoreinrichtung derart ausgebildet ist, dass bei Übermittlung eines ersten negativen Entscheidungswerts (NACK), mit welchem dem Endgerät das Senden einer Nachricht (N) auf dem angefragten Übertragungskanal verweigert wird, mit dem Antwortsignal (AWS) ein zweiter positiver Entscheidungswert (ACK2) an das Endgerät ausgesendet wird, wenn das Endgerät zum Senden einer Nachricht (N) auf einem anderen Übertragungskanal berechtigt ist.

16. Mobilfunknetz mit einer Anzahl von Basisstationen nach Anspruch 15.

17. Mobiles Endgerät mit einer Sende/Empfangseinheit und einer Prozessoreinrichtung mit Mitteln zur Auswahl eines Übertragungskanals zur Übertragung von Nachrichten (N) vom mobilen Endgerät an eine Basisstation, umfassend
- eine Berechtigungsanfrageeinrichtung zur Generierung eines Sendeberechtigungs-Anfragesignals (AP) für einen bestimmten Übertragungskanal,
- und eine Decodierungseinrichtung, welche ein von der Basisstation übersendetes Antwortsignal (AWS) decodiert, um einen ersten Entscheidungswert (ACK, NACK) zu detektieren, mit dem dem Endgerät signalisiert wird, ob es zum Senden einer Nachricht (N) auf dem angefragten Übertragungskanal berechtigt ist oder nicht,
**dadurch gekennzeichnet, dass**
- die Decodierungseinrichtung derart ausgebildet ist, dass sie bei einer Detektion eines ersten negativen Entscheidungswerts (NACK) im Antwortsignal (AWS) das Antwortsignal (AWS) dahingehend weiter analysiert, ob es einen zweiten positiven Entscheidungswert (ACK2) enthält, mit welchem das Endgerät zum Senden der Nachricht (N) auf einem anderen Übertragungskanal berechtigt wird und welche anderen Übertragungskanäle hierfür zur Verfügung stehen,
- und die Prozessoreinrichtung derart ausgebildet ist, dass die Nachricht (N) dann auf einem der zur Verfügung stehenden Übertragungskanäle an die Basisstation gesendet wird.

## Claims

1. Method for selecting a transmission channel for transmission of messages (N) from a mobile terminal to a base station, in which
- the terminal initially sends a send authorisation request signal (AP) for a specific transmission channel to the base station
- and the base station sends out a response signal (AWS) to the terminal which contains a first decision value (ACK, NACK), with which it is signalled to the terminal whether it is authorised to send a message (N) on the requested transmission channel or not,
**characterised in that**,
- the base station, on transfer of a first negative decision value (NACK), with which the sending of a message (N) on the requested transmission channel is refused to the terminal, sends a second positive decision value (ACK2) to the terminal with the response signal (AWS) when the terminal is authorised to send a message (N) on another transmission channel,
- and the terminal, on detection of a first negative decision value (NACK) in the response signal (AWS), analyses the response signal (AWS) further as to whether it contains a second positive decision value (ACK2) with which an authorisation is signalled to the terminal for sending a message on another transmission channel, and which other transmission channels are available for this,
- and the terminal then sends the message (N) to the base station on one of the transmission channels available.

2. Method according to claim 1, **characterised in that** the transmission channel to be selected is one of a number of logical transmission channels which are implemented by using different channelisation codes (Cₛ) on a physical transmission channel (PRACH) used jointly by a number of terminals for transfer of messages (N) to a base station.

3. Method according to claim 1 or 2, **characterised in that** the response signal (AWS) contains channel status information (KI) with which a signal is sent to the terminal concerned indicating which other transmission channels are available for sending a message (N).

4. Method according to one of claims 1 to 3, **characterised in that** the second positive decision value (ACK2) and/or the channel status information (KI) is encoded by at least one signature character sequence (b2₀,...,b2₁₅) of a second signature character sequence set (b2) in the response signal (AWS), which is orthogonal to signature character sequences (b₀,...,b₁₅) of a first signature character sequence set (b), which is used for encoding the first decision value (ACK, NACK) in the response signal (AWS).

5. Method according to claim 4, **characterised in that** the signature character sequence (b2₀,...,b2₁₅) for encoding the second positive decision value (ACK2) and/or the channel status information (KI) is created **in that** each second character of a signature character sequence (b₀,...,b₁₅) of the first signature character sequence set (b) is multiplied by "-1".

6. Method according to claim 5, **characterised in that** the signature character sequences (b2₀,...,b2₁₅) of the second signature character sequence set (b2) are created in each case from the signature character sequences (b₀,...,b₁₅) of the first signature character sequence set (b) by multiplying each second character by "-1".

7. Method according to one of claims 4 to 6, **characterised in that** the second positive decision value (ACK2) is transferred jointly with the channel status information (KI) in a character string (RS) which is encoded with a signature character sequence (b2ₓ) of the second signature character sequence set (b2).

8. Method according to claim 7, **characterised in that** the signature character sequence (b2ₓ) used for encoding the character string (RS) is assigned to the base station.

9. Method according to one of claims 4 to 6, **characterised in that** the second positive decision value (ACK2) for a specific terminal is encoded with a specific signature character sequence (b2ₓ) of the second signature character sequence set (b2) which is assigned to the transmission channel, for which the terminal concerned has previously sent a send authorisation request signal (AP) to the base station.

10. Method according to one of claims 2 to 9, **characterised in that** the response signal (AWS) contains as channel status information (KI) a second negative decision value (NACK2) for each transmission channel occupied at the time concerned.

11. Method according to claim 10, **characterised in that** the second negative decision values (NACK2) are encoded in each case with the signature character sequences from the first set (b) of signature character sequences assigned to the occupied transmission channels concerned.

12. Method according to claim 10, **characterised in that** the second negative decision values (NACK2) are each encoded with signature character sequences from the second signature character sequence set (b2) which are assigned in each case to the occupied transmission channels concerned.

13. Method for selecting a transmission channel for transmission of messages (N) from a mobile terminal to a base station, in which
- the base station initially receives from the terminal a send authorisation request signal (AP) for a specific transmission channel,
- and the base station then sends out a response signal (AWS) to the terminal which contains a first decision value (ACK, NACK) with which it is signalled to the terminal whether it is authorised to send a message (N) on the requested transmission channel or not,
**characterised in that**
the base station, on transfer of a first negative decision value (NACK), with which the sending of a message (N) on the requested transmission channel is refused to the terminal, sends a second positive decision value (ACK2) to the terminal with the response signal (AWS) when the terminal is authorised to send a message (N) on another transmission channel.

14. Method for selecting a transmission channel for transmission of messages (N) from a mobile terminal to a base station, in which
- the terminal initially sends a send authorisation request signal (AP) for a specific transmission channel to the base station,
- and receives from the base station a response signal (AWS),
- and in the response signal (AWS) a first decision value (ACK, NACK) is detected, with which it is signalled to the terminal whether it is authorised to send a message (N) on the requested transmission channel or not,
**characterised in that,**
the terminal, on detection of a first negative decision value (NACK), with which the sending of a message (N) on the requested transmission channel is refused to the terminal, analyses the response signal (AWS) further as to whether it contains a second positive decision value (ACK2), with which a signal is sent to the terminal authorising it to send a message (N) on another transmission channel and which other transmission channels are available for this,
and the terminal then sends the message (N) on one of the available transmission channels to the base station.

15. Base station with a transceiver unit and a processor unit with means for selecting a transmission channel for transmission of messages (N) from a mobile terminal to the base station, comprising
- a decoding device for detection of a send authorisation request signal (AP) sent by a terminal for a specific transmission channel,
- a channel release unit to determine which transmission channels are currently available for sending a message (N),
- and an encoding device, to send a response signal (AWS) to the terminal which contains a first decision value (ACK, NACK), with which it is signalled to the terminal whether it is authorised to send a message (N) on the requested transmission channel or not,
**characterised in that**
the processor unit is embodied such that, on transfer of a first negative decision value (NACK), with which the sending of a message (N) on the requested transmission channel is refused to the terminal, a second positive decision value (ACK2) is sent to the terminal with the response signal (AWS) when the terminal is authorised to send a message (N) on another transmission channel.

16. Mobile radio network with a number of base stations according to claim 15.

17. Mobile terminal with a transceiver unit and a processor device with means for selecting a transmission channel for transmission of messages (N) from the mobile terminal to a base station, comprising
- an authorisation request unit for generation of a send authorisation request signal (AP) for a specific transmission channel,
- and a decoding device which decodes a response signal (AWS) sent by the base station in order to detect a first decision value (ACK, NACK) with which a signal is sent to the terminal indicating whether it is authorised to send a message (N) on the requested transmission channel or not, **characterised in that**
- the decoding device is embodied such that on detection of a first negative decision value (NACK) in the response signal (AWS) it analyses the response signal (AWS) further as to whether it contains a second positive decision value (ACK2) with which the terminal is authorised to send the message (N) on another transmission channel and which other transmission channels are available for this,
- and the processor device is embodied such that the message (N) is then sent on one of the available transmission channels to the base station.

## Revendications

1. Procédé de sélection d'une voie de transmission en vue de la transmission de messages (N) d'un terminal mobile à une station de base, dans lequel
- le terminal envoie d'abord à la station de base un signal de demande d'autorisation d'émettre (AP) sur une voie de transmission déterminée, et
- la station de base transmet au terminal un signal de réponse (AWS) contenant une première valeur de décision (ACK, NACK) avec laquelle il est signalé au terminal qu'il est ou n'est pas autorisé à émettre un message (N) sur la voie de transmission demandée,
**caractérisé en ce que** :
- en cas de transmission d'une première valeur de décision négative (NACK) avec laquelle l'émission d'un message (N) sur la voie de transmission demandée est refusée au terminal, la station de base envoie au terminal avec le signal de réponse (AWS) une seconde valeur de décision positive (ACK2) lorsque le terminal est autorisé à émettre un message (N) sur une autre voie de transmission, et
- **en ce que**, en cas de détection d'une première valeur de décision négative (NACK) dans le signal de réponse (AWS), le terminal analyse plus avant le signal de réponse (AWS) pour déterminer s'il contient une seconde valeur de décision positive (ACK2) avec laquelle une autorisation d'émettre un message sur une autre voie de transmission est signalée au terminal, et quelles autres voies de transmission sont disponibles à cette fin, et
- **en ce que** le terminal envoie ensuite le message (N) à la station de base sur l'une des voies de transmission disponibles.

2. Procédé selon la revendication 1, **caractérisé en ce que** la voie de transmission à sélectionner est une voie de transmission logique parmi une pluralité de voies de transmission logiques qui sont réalisées par utilisation de différents codes de découpage en voies (Cₛ) sur une voie de transmission physique (PRACH) utilisée conjointement par plusieurs terminaux pour transmettre des messages (N) à une station de base.

3. Procédé selon la revendication 1 ou 2, **caractérisé en ce que** le signal de réponse (AWS) contient des informations d'état de voie (KI) avec lesquelles il est signalé au terminal concerné quelles autres voies de transmission sont disponibles pour émettre un message (N).

4. Procédé selon l'une quelconque des revendications 1 à 3, **caractérisé en ce que** la seconde valeur de décision positive (ACK2) et/ou les informations d'état de voie (KI) sont codées dans le signal de réponse (AWS) au moyen d'au moins une séquence de caractères de signature (b2₀, ..., b2₁₅) d'un second jeu de séquences de caractères de signature (b2) qui est orthogonale aux séquences de caractères de signature (b₀,..., b₁₅) d'un premier jeu de séquences de caractères de signature (b) qui sont utilisées pour coder la première valeur de décision (ACK, NACK) dans le signal de réponse (AWS).

5. Procédé selon la revendication 4, **caractérisé en ce que** la séquence de caractères de signature (b2₀, ..., b2₁₅) servant à coder la seconde valeur de décision positive (ACK2) et/ou les informations d'état de voie (KI) est produite en multipliant par « -1 » un caractère sur deux d'une séquence de caractères de signature (b₀, ..., b₁₅) du premier jeu de séquences de caractères de signature (b).

6. Procédé selon la revendication 5, **caractérisé en ce que** les séquences de caractères de signature (b2₀, ..., b2₁₅) du second jeu de séquences de caractères de signature (b2) ont été produites chacune à partir des séquences de caractères de signature (b₀, ..., b₁₅) du premier jeu de séquences de caractères de signature (b) en multipliant un caractère sur deux par « -1 ».

7. Procédé selon l'une quelconque des revendications 4 à 6, **caractérisé en ce que** la seconde valeur de décision positive (ACK2) est transmise conjointement avec les informations d'état de voie (KI) dans une chaîne de caractères (RS) qui est codée avec une séquence de caractères de signature (b2ₓ) du second jeu de séquences de caractères de signature (b2).

8. Procédé selon la revendication 7, **caractérisé en ce que** la séquence de caractères de signature (b2ₓ) utilisée pour coder la chaîne de caractères (RS) est allouée à la station de base.

9. Procédé selon l'une quelconque des revendications 4 à 6, **caractérisé en ce que** la seconde valeur de décision positive (ACK2) est codée pour un terminal déterminé au moyen d'une séquence de caractères de signature (b2ₓ) déterminée du second jeu de séquences de caractères de signature (b2) qui est allouée à la voie de transmission pour laquelle le terminal concerné a envoyé préalablement à la station de base un signal de demande d'autorisation d'émettre (AP).

10. Procédé selon l'une quelconque des revendications 2 à 9, **caractérisé en ce que** le signal de réponse (AWS) contient une seconde valeur de décision négative (NACK2) comme informations d'état de voie (KI) pour chaque voie de transmission occupée au moment considéré.

11. Procédé selon la revendication 10, **caractérisé en ce que** les secondes valeurs de décision négatives (NACK2) sont codées chacune au moyen des séquences de caractères de signatures du premier jeu (b) de séquences de caractères de signature qui sont allouées aux voies de transmission occupées concernées.

12. Procédé selon la revendication 10, **caractérisé en ce que** les secondes valeurs de décision négatives (NACK2) sont codées chacune au moyen de séquences de caractères de signatures du second jeu (b2) de séquences de caractères de signature qui sont allouées chacune aux voies de transmission occupées concernées.

13. Procédé de sélection d'une voie de transmission en vue de la transmission de messages (N) d'un terminal mobile à une station de base, dans lequel :
- la station de base reçoit d'abord du terminal un signal de demande d'autorisation d'émettre (AP) sur une voie de transmission déterminée, et
- la station de base envoie ensuite au terminal un signal de réponse (AWS) contenant une première valeur de décision (ACK, NACK) avec laquelle il est signalé au terminal qu'il est ou n'est pas autorisé à émettre un message (N) sur la voie de transmission demandée,
**caractérisé en ce que** :
en cas de transmission d'une première valeur de décision négative (NACK) avec laquelle l'émission d'un message (N) sur la voie de transmission demandée est refusée au terminal, la station de base envoie au terminal avec le signal de réponse (AWS) une seconde valeur de décision positive (ACK2) lorsque le terminal est autorisé à émettre un message (N) sur une autre voie de transmission.

14. Procédé de sélection d'une voie de transmission en vue de la transmission de messages (N) d'un terminal mobile à une station de base, dans lequel :
- le terminal envoie d'abord à la station de base un signal de demande d'autorisation d'émettre (AP) sur une voie de transmission déterminée, et
- reçoit de la station de base un signal de réponse (AWS), et
- détecte dans le signal de réponse (AWS) une première valeur de décision (ACK, NACK) avec laquelle il est signalé au terminal qu'il est ou n'est pas autorisé à émettre un message (N) sur la voie de transmission demandée,
**caractérisé en ce que** :
en cas de détection d'une première valeur de décision négative (NACK) avec laquelle l'émission d'un message (N) sur la voie de transmission demandée est refusée au terminal, le terminal analyse le signal de réponse (AWS) pour déterminer s'il contient une seconde valeur de décision positive (ACK2) avec laquelle il est signalé au terminal qu'il est autorisé à émettre un message (N) sur une autre voie de transmission, et
quelles autres voies de transmission sont disponibles à cet effet, et
**en ce que** le terminal envoie ensuite le message (N) à la station de base sur l'une des voies de transmission disponibles.

15. Station de base comprenant une unité émettrice-réceptrice et un dispositif formant processeur comprenant des moyens de sélection d'une voie de transmission en vue de la transmission de messages (N) d'un terminal mobile à la station de base, comprenant :
- un dispositif de décodage en vue de la détection d'un signal de demande d'autorisation d'émettre (AP) sur une voie de transmission déterminée, transmis par un terminal ;
- un dispositif de validation de voie pour déterminer quelles voies de transmission sont actuellement disponibles en vue de la transmission d'un message (N), et
- un dispositif de codage pour envoyer au terminal un signal de réponse (AWS) contenant une première valeur de décision (ACK, NACK) avec laquelle il est signalé au terminal qu'il est ou n'est pas autorisé à émettre un message (N) sur la voie de transmission demandée,
**caractérisé en ce que** :
le dispositif formant processeur est configuré de telle sorte qu'en cas de transmission d'une première valeur de décision négative (NACK) avec laquelle l'émission d'un message (N) sur la voie de transmission demandée est refusée au terminal, une seconde valeur de décision positive (ACK2) est envoyée au terminal avec le signal de réponse (AWS) lorsque le terminal est autorisé à émettre un message (N) sur une autre voie de transmission.

16. Réseau de radiotéléphonie mobile comprenant un certain nombre de stations de base selon la revendication 15.

17. Terminal mobile comprenant une unité émettrice-réceptrice et un dispositif formant processeur comprenant des moyens de sélection d'une voie de transmission en vue de la transmission de messages (N) d'un terminal mobile à une station de base, comprenant :
- un dispositif de demande d'autorisation pour produire un signal de demande d'autorisation d'émettre (AP) sur une voie de transmission déterminée, et
- un dispositif de décodage qui décode un signal de réponse (AWS) transmis par la station de base pour détecter une première valeur de décision (ACK, NACK) avec laquelle il est signalé au terminal qu'il est ou n'est pas autorisé à émettre un message (N) sur la voie de transmission demandée, **caractérisé en ce que** :
- le dispositif de décodage est configuré de telle sorte qu'en cas de détection d'une première valeur de décision négative (NACK) dans le signal de réponse (AWS), il analyse plus avant le signal de réponse (AWS) pour déterminer s'il contient une seconde valeur de décision positive (ACK2) avec laquelle le terminal est autorisé à émettre un message (N) sur une autre voie de transmission, et quelles autres voies de transmission sont disponibles à cet effet, et
- le dispositif formant processeur est configuré de telle sorte que le message (N) est ensuite envoyé à la station de base sur l'une des voies de transmission disponibles.
